# EUROPEAN PATENT APPLICATION

(11) **EP 1 324 243 A1**
(43) Date of publication of application: **02.07.2003**
(21) Application number: 01972638.9
(22) Date of filing: 01.10.2001
(51) Int. Cl.: G06F 17/60

(54) **AGENT SYSTEM, AGENT SELLING METHOD, INFORMATION PROVIDING DEVICE, AND DATA RECORDED MEDIUM**

(30) Priority: 29.09.2000 JP 2000000301
(71) Applicant: Sony Corporation, Tokyo 141-0001 (JP)
(72) Inventor: Asami, Akiko c/o Sony Corporation, Tokyo 141-0001 (JP)
(74) Representative: Nicholls, Michael John
(86) International application number: JP0108654
(87) International publication number: WO02027591

(57) **Abstract**

The invention provides an agent system, an agent buying/selling method, a data-providing apparatus and a data-recording medium, which are novel and enable the user to obtain, with ease, an electronic pet that can acts as an agent with various abilities. The agent system comprises at least one client computer which has a display device connected to a communications network, and at least one server computer connected to the client computer by the communications network and having a community (67) which can store an agent (63). The community (67) has an agent market (65z). In the community, the property right to the agent (63) can be transferred.

## Description

### Technical Field

The present invention relates to an agent system, an agent-buying/selling method, a data-providing apparatus and a data-recording medium. In particular, the invention relates to an agent system, an agent-buying/selling method, a data-providing apparatus and a data-recording medium, in which an agent, which is displayed as an electronic pet, can be bred and then be transferred or exchanged in a community.

### Background Art

A so-called "agent system" is generally known, in which a agent program, i.e., a computer program, is executed to simulates human relations by performing work for human workers in an on-line scheme.

In the agent system, the agent program remains installed in a computer and functions as an agent of the user. When an event takes places, the agent program is activated to act as is desired in a network. The agent program is an autonomous program that may "talk" with character data displayed on the display screen of the computer or may "acts" as the agent of the user on the network. The agent program work by itself, without any human assistance.

When given a command of "search for this product," for example, the agent automatically causes the computer to have access to the data-providing server of the company that supplies that product. If no data about the product is found in the data-providing server, the agent makes the computer to a server that provides a virtual mall or the like. Thus, the agent moves, as it were, along the communications lines to search for the desired data. A so-called "mobile agent (mobile script)" is known, too. The mobile agent works while moving along the communications lines.

Another type of an agent system is known in which an agent program is sent to a server computer. In the server computer, the agent program is executed to perform works such as retrieval of information. In this system, any client computer can control the execution of program carried out in the server computer and can receive the results of the execution of program.

The client computer may acquire various application programs from the server computer and may then use the application programs. In this regard, the technique of charging an amount of money for the time the client computer has used the application programs is known.

An agent program may be sent to the server computer and executed in the server computer to retrieve information or to achieve a similar operation. In this case, the user must acquire an agent with a prescribed ability. However, the user can hardly know where such agents are available.

The user does not always need agents having the same ability. At some time, the user may want an agent that has much financial information. At another time, he or she may wish to have an agent that knows much about political situation. At still another time, he or she may need an agent that can give detailed information about plays and games. In short, the user wants agents of various abilities at different times, depending on the nature of his or her work on hand or the type of his or her hobby. However, it is not easy for the user to obtain a desirable agent.

Hitherto, agents available for the user are limited to those developed by specific software companies. Further, the software programs each agent can execute are limited to only a few patterns. Moreover, it is not so interesting for the user to choose an agent from among a few choices.

### Disclosure of Invention

The present invention has been made in view of the foregoing. An object of the invention is to provide an agent system, an agent buying/selling method, a data-providing apparatus and a data-recording medium, which are novel and enable the user to obtain, with ease, an electronic pet that can acts as an agent with various abilities.

Another object of the present invention is to provide an agent-buying/selling method, a data-providing apparatus and a data-recording medium, which are concerned with various agents reared by professional breeders or hobbyist-breeders.

A further object of the invention is to provide an agent system, an agent-buying/selling method, a data-providing apparatus and a data-recording medium, which are novel and user-friendly and concerned with characterized electronic pets that act as agents.

To achieve the objects mentioned above, an agent system according to this invention comprises: at least one client computer which has a display device connected to a communications network; and at least one server computer connected to the client computer by the communication network and having a community which can store an agent. The community has an agent market in which the property right to the agent can be transferred. Therefore, in the community, software firms, breeders and the like can sell agents at high prices, which they have bred and which have added values. They can get new business chances. This activates the breeding of agents at the breeders, the software firms and the like. The firms breed many agents exhibiting various characteristics, increasing choices the user can have. Hence, the user can enjoy selecting some agents, each of which exhibits desirable individuality.

The agent may have a process program for performing at least one process selected from the group consisting of a information collecting process and an agent process. The market can therefore provide agents that have great commercial values.

It is desired that the agent has an electronic pet/agent-displaying program for causing the display device to display the agent in the form of an electronic pet. Then, the agent is displayed as an electronic pet. The user can more enjoy using the agent system than otherwise.

In the system, the property right to the agent may be transferred by registering an owner of the agent by owner-registering means provided in the community. If so, it is easy to transfer the property right.

The agent may be set free in a data acquisition region defined by specific concept, and information autonomously acquired in the data acquisition region may be accumulated to constructing a database. If this is the case, the agent can accumulate only the information useful to the user. That is, the agent does not collect information from data items dispersed at random. Rather, the agent only needs to acquire information from the data acquisition region defined by the specific concept. This achieves efficient data acquisition.

It is desired that the agent be specialized in a prescribed field. Then, it is possible to breed agents specialized in different fields. The market can therefore provide various agents, each specialized in a particular field. That is, agents, each having much knowledge of one field, can be sold and bought in the market. Each agent can be very useful to the user.

An agent buying/selling method according to the invention comprises: building a community that can store an agent that is connected to an information device; opening an agent market in the community; displaying the agent as an agent that can be selected in the market opened in the community; and designating the agent displayed in the market, thereby to transfer the property right to the agent. In the method, the property right to the agent is transferred when the agent is designated in the market opened in the community. Hence, the user can easily understand the outline of the market. Additionally, the user can compare the agents available on the market, in terms of their conditions, and can reliably select the most desirable agent.

In the agent buying/selling method according to the invention, the agent that can be bought and sold is a process program for performing at least one process selected from the group consisting of a information collecting process and an agent process.

In the method of the invention, the agent has an electronic pet/agent-displaying program for displaying the agent in the form of an electronic pet. The agents are displayed to exhibit different characteristics. Thus, the user can easily distinguish the agents, one from another, even if many agents exist in the market. The user quickly find whichever agent he or she wants. Further, the user can select one agent, while reviewing the characterizing features of each agent at his or her leisure.

In the agent buying/selling method of the invention, the property right is transferred by registering an owner of the agent by owner-registering means provided in the community. For example, the user may input his or her ID number, registering himself or herself as the owner of the agent. The property right to the agent is easily transferred to the user. The data items about the sales of the agent may be accumulated and analyzed, enabling the user to grasp the trend prevailing in the market opened in the community.

A data-providing apparatus comprising a community connected to an information device by a communications network and having an agent market in which the properties right to the agent can be transferred. In the case of the embodiment described herein, the communications network 2 connects the server computer 1-1, i.e., information-providing apparatus, to the user computer 3-1 that operates as an information device. The server computer 1-1 has a community 67, in which an agent market 65z is opened. In the agent market 65z, the property right to the agent 63 is transferred. The agent 63 has a process program for performing at least one process selected from the group consisting of a information collecting process and an agent process. Moreover, the agent 63 has an electronic pet/agent displaying program for causing a display device provided in the information device to display the agent as an electronic pet, on the display 17 that is provided in the user computer 3-1 and functions as an information device. The property right is transferred when the agent sales-data storage section 69c, i.e., owner-registering means, stores the data representing the owner of the agent 63. In the server computer 1-1, i.e., data-providing apparatus, the agent 63 is set free in the places 65a to 65z, i.e., data acquisition region defined by the specific concept. The agent 63 acquires data items in the places 65a to 65z and accumulates the data items, constructing a database. Moreover, the agent is specialized in a prescribed field.

The program that is executed to operate the agent system of this invention is stored in a data-recording medium. The program describes a step of building a community which can store an agent that is connected to an information device; a step of opening an agent market in the community; a step of displaying the agent as an agent that can be selected in the market opened in the community; a step of designating the agent displayed in the market; and a step of transferring property right to the agent designated.

### Brief Description of the Drawings

FIG 1 is a block diagram showing the major components of an agent system according to the present invention.
FIG. 2 is a block diagram illustrating the hardware configuration of a user computer.
FIG. 3 is a diagram explaining a community.
FIG. 4 is a block diagram depicting an agent system according to this invention.
FIG. 5 shows an example of a creature table.
FIG. 6 is a diagram showing a memory map of the data that determines the features of an agent displayed on the screen.
FIG. 7 is a block diagram illustrating the sequence of exchanging data between agents.
FIG. 8 is a diagram showing how a program is executed in the agent system.
FIG. 9 is a flowchart explaining how a program is executed to form a community.
FIG. 10 is a part of a flowchart explaining how a program is executed to register an owner of an electronic pet.
FIG. 11 is another part of the flowchart explaining how a program is executed to register an owner of an electronic pet.
FIG. 12 is a flowchart explaining how an agent is brought up.
FIG. 13 is a diagram illustrating the screen of a community site.
FIG. 14 is a diagram depicting screen-introducing agents.
FIG. 15 is a diagram showing a screen for buying an agent.
FIG. 16 is a diagram showing a screen for setting various features for an agent.
FIG. 17 is a diagram illustrating a market.
FIG. 18 is a diagram depicting a screen for displaying the information about the sale of agents.
FIG. 19 is a diagram showing a screen for evaluating an agent.
FIG. 20 is a diagram depicting a screen for buying an agent.
FIG. 21 is a diagram explaining a process performed via a friend agent.

### Best Mode for Carrying out the Invention

An agent system, an agent buying/selling method, a data-providing apparatus and a data-recording medium, according to the invention, will be described, with reference to the accompanying drawings. More precisely, an agent system according to the invention will be described below. Needless to say, the following description also encompasses a data-providing method and a data-providing apparatus. It also relates to a data-recording medium for use in the method and apparatus to make a computer perform prescribed processes.

The word "agent" means a software program that is activated when an event takes place and autonomously performs an appropriate process by using the knowledge base it has. An agent is represented as an electronic pet.

In the agent system according to this invention, agents are classified into two types. The first type is a unique agent to the user. The second type is an agent that the user can buy. The user may call any agent of the second type to his or her data terminal, whenever necessary. In this specification, the first type and the second type shall be called "friend agent" and "agent for sale," respectively.

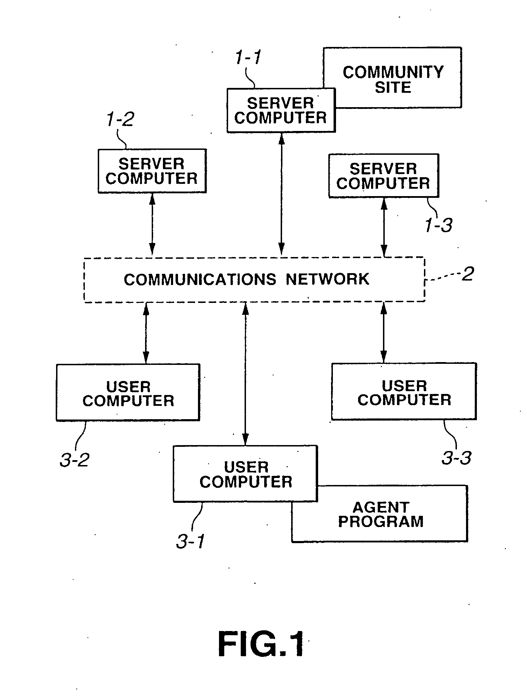

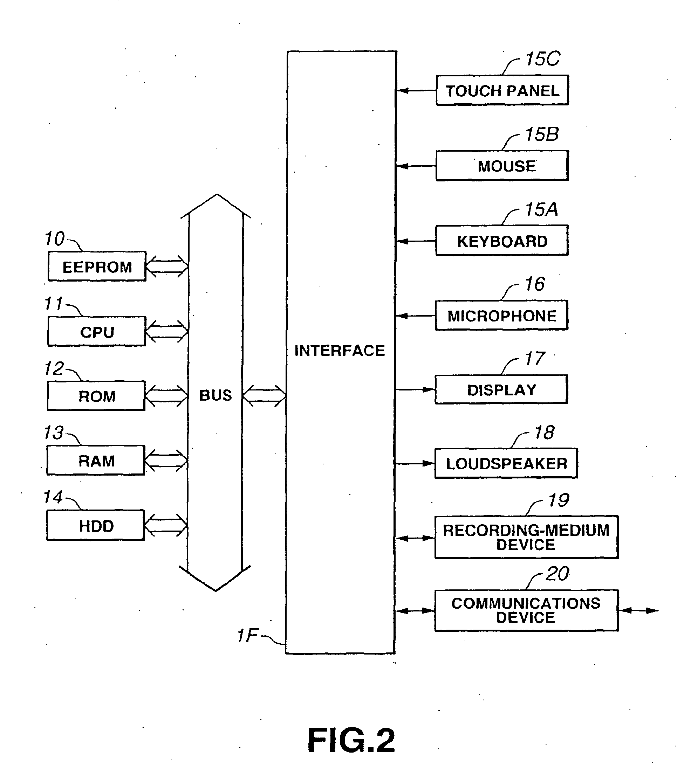

An agent system according to this invention will be described with reference to FIGS. 1 and 2. FIG. 1 is a block diagram illustrating the major components of the agent system of the present invention. As FIG. 1 shows, the system comprises at least one server computer and at least one user computer. More precisely, it comprises server computers 1-1 to 1-3, and user computers 3-1 to 3-3. The server computers 1-1 to 1-3 are connected to a communications network 2. The user computers 3-1 to 3-3 are linked with the server computers 1-1 to 1-3 through the communications network 2. The user computers 3-1 to 3-3 may be not only personal computer of ordinary type, but also data terminal, such as personal digital assistance (PDA) terminals and mobile telephones, and various electronic apparatuses, such as game devices, television receivers and video apparatuses. In the present embodiment, the user computers 3-1 to 3-3 and the server computers 1-1 to 1-3 are directly connected to the communications network 2. Instead, the user computers may be linked with the network 2 through some server computers if they are personal computers.

The server computers 1-1 to 1-3 are owned by, for example, providers. The communications network 2 may be the Internet, a personal-computer network, a cable network, or a dedicated channel network. Further, it may be a packet communications network, either cabled or wireless.

FIG. 2 is a block diagram depicting the hardware configuration of the user computer 3-1. (The other user computers 3-2 and 3-3 have the same hardware configuration.) The user computer 3-1 comprises a CPU 11, a ROM 12, a RAM 13, an HDD 14, and a recording-medium device 19. The CPU 11 is a device that performs operations on data and controls the other components of the user computer. The ROM 12, RAM 13 and HDD 14 are data storage devices. The CPU 11 carries out various processes in accordance with the programs stored in the ROM 12, the HDD 14, or the like. The RAM 13 holds data that the CPU 11 uses to perform various processes. The user computer 3-1 further comprises an EEPROM 10, which stores data such as the terminal ID of the user computer 3-1. Note that this data should remain stored even after the power switch to the user computer 3-1 is turned off.

The user computer 3-1 further comprises a keyboard 15A, a mouse 15B, and a touch panel 15C, which are operated to input specific instructions. The user computer 3-1 comprises a microphone 16, a display 17, and a loudspeaker 18, too. The microphone 16 is used to input audio signals. The display 17 displays specific image data. The loudspeaker 18 outputs specific audio signals.

The recording-medium device 19 comprises an external hard disc, a magneto-optic disc, a CD-R, a DVD, a memory stick, or the like. The device 19 stores the data transmitted to the user computer 3-1 through the communications network 2. The data can be read from the recording-medium device 19 whenever necessary. A communications device 20 is provided to transmit data to the communications network 2 and to receive the data supplied via the communication network 2. An interface IF is provided between peripheral devices, such as the keyboard 15A, communications device 20 and the like, and the CPU 11, to effect an interface process. In this embodiment, the user data terminals are computers. Nonetheless, the data terminals may be replaced with other electronic devices such as mobile telephones, PDAs or game devices.

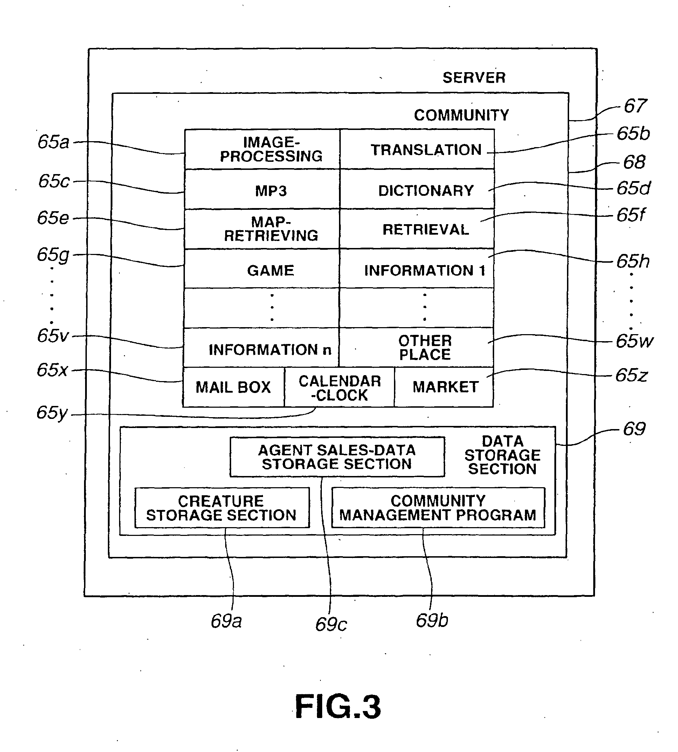

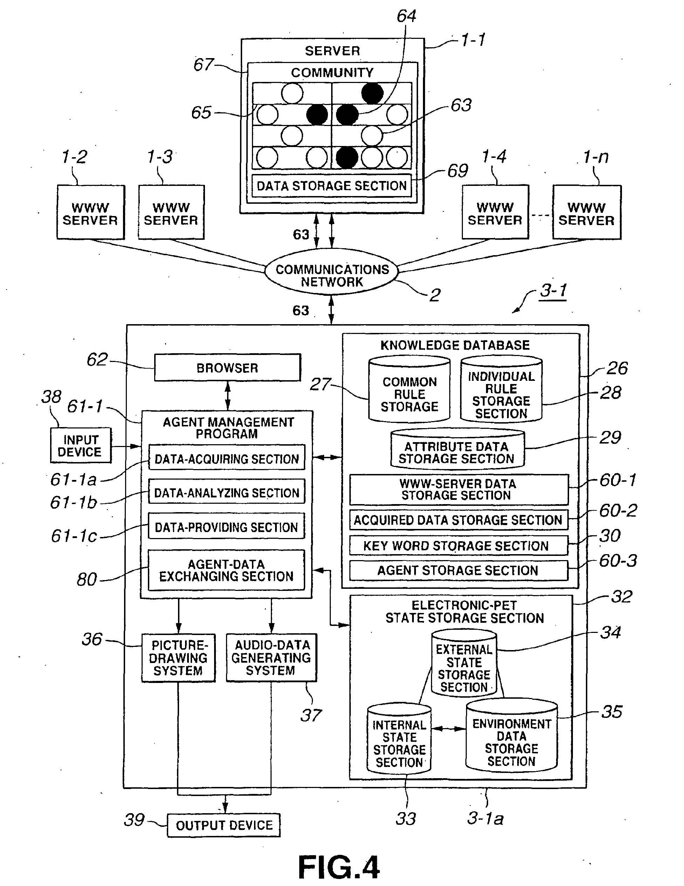

Although not illustrated, the server computers 1 shown in FIG. 1 have same basic structure as the user computer 3-1. As shown in FIGS. 3 and 4, a community 67 is provided in a prescribed region in the server computer 1-1. The community 67 is a work area, in which creatures 64 including an agent 63, is provided. The community 67 has a plurality of places 65a to 65z and a data storage section 69. The section 69 stores programs for the creatures 64.

In the present embodiment, the community 67 is provided in one server computer, i.e., the server computer 1-1. Nevertheless, the community 67 is not limited to this. It may be a virtual space that is defined on the basis of a particular concept.

If the community 67 is a virtual space defined by a specific concept, it will be considered to exist in a plurality of server computers 1-1 to 1-n as is illustrated in FIG. 4. To use the agent system according to this embodiment, however, two conditions must be satisfied. First, the owners of the agents (i.e., electronic pets) 63 that live in the community 67 is a participant to the system. Second, these agents can be bought and sold, or exchanged among the owners. The community is therefore partitioned into spaces that exist in the server computers 1-1 to 1-n. Thus, the space in which each agent (electronic pet) lives is provided in one of the server computers 1-1 to 1-n.

The creature 64 is a program that acts like a living thing. The creature 64 contains an electronic pet displaying program that causes the display 17 of the user computer 3-1 (i.e., client computer or another information apparatus) to display the creature as a character. The creature 64 can grow into an agent. In most cases, however, the display 17 displays it as an immature, electronic pet at an initial stage.

The information as to how creatures 64 behave in what conditions and what sounds (languages) they utter is stored in the creature storage section 69a that is provided in the community 67. The information stored in the section 69a includes various data items. Among the data items are: data items such as "knowledge on daily life" and "knowledge on various subjects," a calendar data item, a data item showing the frequency at which each pet appears on the screen, a data item indicating the frequency at which the pet asks the user questions, an data item showing the type of sound the character utters, a data item representing the kind of the character (a creature from outer space, an animal, a plant, a robot, or the like). These data items will continuously change as the user of the agent interacts with the agent system. As the data items change, the information the creatures 64 give the user will continuously change.

The creature storage section 69a stores the internal parameters and external parameters of each electronic pet and the data items about the physical environment of the creature. The internal parameters (i.e., parameters that any other electronic pet cannot perceive) include emotion, hunger and interest and the like of the pet. The external parameters (i.e., parameters that any other electronic pet can know) include the position, orientation and color of the pet. The data items about the physical environment of the creature represent the objects other than the electronic pets, the temperature, the gravity, the date, and the like.

In the present embodiment, the creature storage section 69a stores the data items about the behavior of the creatures 64. Nonetheless, each creature 64 may have data storage means that stores these data items.

The creatures 64 may be various programs. Among the creatures 64 are agent (electronic pets) 63. That is, the term "agent" can be said to mean one of the occupations each creature 64 may have. In the following description, "agent" and "electronic pet" will be used to mean the same thing.

Generally, each creature 64 does not have, at first, data that enables it to act as an agent 63. The creature 64 grows into an agent 63 as its owner, or breeder, rears it, making it participate in the events held in the community 67 and acquire various information. Namely, the creature 64 becomes an agent 63 as it gradually accumulates data and programs.

The agent 63 has some storage areas. A specific one of the storage areas hold an agent program that can perform a variety of processes. The program that can be executed in the agent 63 differs from the program that can be executed in any other agent. The agent has a process program that effects a data-acquisition process or an agent process, or both. Some agent may have process programs, such as image processing, translation, compression of music data, dictionary retrieval, map retrieval, game processing, E-mailing and schedule management.

The term "data-acquisition process" means a process in which the agent 63 acquires specific information by accessing, in accordance with a prescribed key word, the server computers 1-1 to 1-n that are connected to the communication 2. During the data-acquisition process, the agent 63 intermediates between the user and a retrieval engine provided on the network.

Assume that the key words are "trip to Hokkaido." Then, the agent 63 accesses the server computer that is designated with the words "Hokkaido" and "trip" and acquires information about a "trip to Hokkaido." A database on the "trip to Hokkaido" is built in a storage area provided in the computer that controls the agent 63. The database may be built in the agent 63, not in the storage area provided in the computer. The agent 63 acquires information not only in accordance with a command given by the user, but also based on the information obtained from the user's instructions and representing the user's taste. The agent 63 may therefore give the user some information and topics of conversation. Moreover, the agent 63 may search for other agents that can probably collect information interesting to the user, may acquire such information and may give it to the user. (It does not matter whether the other agents can be bought or sold.)

The term "agent process" means a process in which the agent 63 performs various jobs on behalf of the user. In the agent process, the agent 63 can collect information, select data items from the information, make reservations, perform registering, and settle accounts. For example, the agent 63 may select one of the trip items offered by travel agents, which seems most interesting to the user, may make a reservation for the trip item selected, and may pay the bill for the trip.

The agent 63 autonomously accesses the server computers 1-1 to 1-n connected to the communications network 2, in accordance with the user's demand and the key words showing the user's taste. Thus, the agent 63 performs the agent process.

The agent 63 (i.e., an electronic pet) is a creature 64, as well. Therefore, it is natural that the agent 63 should have an agent-displaying program that causes the display 17 of the user computer 3-1 to display the outer appearance, language and behavior pattern of the creature. The agent-displaying program corresponds to the display program that the creature 64 has, however, it has a different name.

The agent 63 specializes in a particular field, which may be travel, music, language, science-technology, or the like. The special field may be divided into sub-fields. For example, the science-technology field may be divided into information technology, semiconductor devices, fuels, pharmaceuticals, and the like.

There are provided an agent specializing in travel, an agent specializing in music, an agent specializing in architecture, and so on. The user can select an agent that specializes in the field he is interested in. It is desired that each agent 63 should have a network address. The network address is, for example, an IP address of IP ver. 6. If the agent has an IP address, the IP address can be the present address the user of the agent has on the network. The IP address can identify the agent and is therefore useful in identifying the agent in the course of buying or selling the agent.

The places 65a to 65z are work areas of the creatures 64. As shown in FIG. 3, they are categorized and marked off, one from another. They are an image-processing place 65a, an translation place 65b, a music-compressing place 65c such as MP3, a dictionary place 65d, a map-retrieving place 65e, a retrieval place 65f, a game place 65g, information 1 place 65h to information n place 65v, and so on.

The information 1 place 65h to the information n place 65v are categorized to, for example, cars, driving-rout maps, domestic tourism, overseas tourism, sports, and music. Each category has various items. The place categorized to cars, for example, has items such as a car model, a driving route, parts, makers, and so on. One pointer is registered in each category, to designate one of the items included in the category.

The community 67 has another place 65w for a creature 64 that has not grown yet into an agent 63 because it has but an insufficient amount of data. Each of the places 65a to 65w may be divided into smaller regions, if necessary. The community 67 further has some other places, i.e., an E-mail box 65x, a calendar-clock 65y, and an agent market *65z.* These places 65x, 65y and 65z are work areas that are used to buy and sell agents.

The agent market 65z is a work area for transfer the property right to agents. The display 17 of the user computer 3-1 displays the agents 63 so that any agent may be selected in the market 65z.

In the present embodiment, the agents 63 are bought and sold in the market 65z, thus transferring the property right to them. Instead, the agents 63 may be exchanged, one with another, in the market 65z, without the transfer of property right or the transfer of money.

The data storage section 69 of the community 67 comprises a creature storage section 69a, a community management program 69b and an agent sales-data storage section 69c. The creature storage section 69a stores the creatures 64 including the agents 63. The creatures 64 include not only movable agents, but also stationary agents that stationed in the community 67.

The creature storage section 69a comprises a RAM or the like and stores a creature table. The creature table contains the information about the creatures 64 including the agents 63.

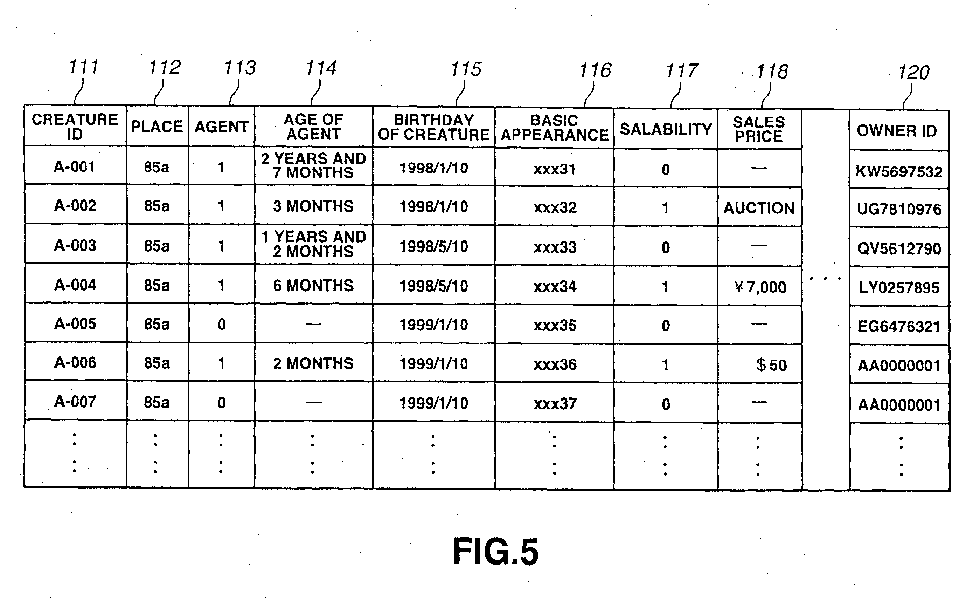

FIG. 5 is a diagram illustrating the creature table. The creature table has a creature ID column 111, a place column 112, an agent column 113, an agent-age column 114, a creature-birthday column 115, a basic appearance column 116, a salability column 117, a sales-price column 118, and an owner ID column 120.

The IDs of the creatures 64 are described in the creature ID column 111. Each ID does not distinguish a creature 64 from an agent 63.

Described in the place column 112 are the places where the creatures 64 including the agents 63 may be stored. Described in the agent column 113 is information showing whether the creatures 64 are the agents 63 or not. In this column, "1" is written if the creature has grown into an agent, and "0" is written if the creature has not so grown.

In the agent-age column 114 there is described the number of years each agent 63 has lived after it had matured from a creature 64. The agent age can be used as data whether the size of the process program and the data amount of the agent is large or not. That is, the higher the agent age, the larger the size of the processing program and the data amount of the agent, although it depends on the agent.

Described in the creature-birthday column 115 are described the dates when the creatures 64 including the agents 63 were generated. Described in the basic appearance column 116 are the addresses in a memory map 27a that shows the basic outer appearances of the agents 63. The memory map 27a will be described later.

Described in the salability column 117 are the data items showing whether the agents 63 can be sold in the agent market 65z for sale. The data item about each agent 63 is "1" if the agent can be sold in the agent market 65z, and is "0" if it cannot be sold there.

In the sales-price column 118, there are described the prices at which the agents 63 are put on the market *65z.* Described in the owner ID column 120 are the IDs of the users, or the owners of the creatures 64 including the agents 63. If the provider of the agent system is an owner of a creature 64, his or her ID will be described in the owner ID column 120.

The owner of the creature 64 may be a seller who sells the agent 63 in the market 65z of the community 67. The seller of the agent 63 may be a software firm, a trade company, an agent breeder, or the like.

In the present invention, the word "breeder" means a person who rears agents. The breeder brings up the agents, either for a hobby or a business. To breed an agent is to own or rent the agent, collect a number of data items and give the data items to the agent, thereby changing the agent to a desirable one.

The community 67 may be a virtual space that is defined on the basis of a particular concept and may be provided in a plurality of personal computers 1-1 to 1-n. If this is the case, the creature table has a column for describing an URL that should be linked with the place where the creature 64 (including the agent 63) lives.

The creature table is configured to be rewritten whenever necessary. The data in the table is rewritten or updated when the owner of the agent 63 changes, when the creature 64 grows into an agent 63 or when the agent 63 changes in basic outer appearance in order to, for example, store a new creature 64 into the community 67. The data described in the creature table may have either a fixed length or a variable length.

The agent sales-data storage section 69c stores the data about the agent 63 put on sale, which has been extracted from the creature table. That is, the data items about the agent 63, for which "1" is described in the salability column 117, are extracted from the creature table and stored into the section 69c. (These data items are described in the creature ID column 111, place column 112, agent column 113, agent-age column 114, creature-birthday column 115, basic appearance column 116, sales-price column 118 and owner ID column 120.)

The agent sales-data storage section 69c stores the agent sellers who have been allocated to the places 65a to 65w provided in the market. The ID numbers and prices of the agents 63 each seller offers are registered in one place provided in the market.

The term "agent seller" means a person who sells agents 63 in the agent market 65z opened in the community 67. Each agent seller may be a software firm, a trade company, an agent breeder, or the like.

The information stored in the agent sales-data storage section 69c can be retrieved with reference to a key word, by using a retrieval program. Necessary information can therefore be acquired from a plurality of areas even if the information associated with a key word are divided into parts and these parts of data are stored in said plurality of areas.

The creatures may be extracted and stored into the agent sales-data storage section 69c. In this case, the creatures 64 can be sold even if they have not grown into agents yet.

The agent sales-data storage section 69c functions as means for registering owners of agents. The section 69c stores a list of the owners of agents 63. Whenever any agent is sold and bought in the market 65z and the property right to the agent is transferred from the seller to the buyer, the owner ID of the new owner of the agent is recorded in the agent sales-data storage section 69c.

The community management program 69b includes a software program that serves to transfer agents 63 between the server computer 1-1 and each user computer 3-1, at the request made by the user computer 3-1. This function is realized when the CPU 11 carries out the program.

The community 67 stores creatures 64 including agents 63. Thus, the agents 63 can of course exchange information among themselves in the community 67.

The agent system according to this embodiment will be described in detail, with reference to FIG. 4. The agent system comprises a sever computer 1-1 and a user computer 3-1. The relation between the computers 1-1 and 3-1 will be explained, though the system further comprises other server computers and other user computers, as shown in FIG. 1.

The user computer 3-1 comprises an agent management program 61-1, a browser 62, a knowledge database 26, an electronic-pet state storage section 32, a picture-drawing system 36, an audio-data generating system 37, an input device 38, and an output device 39. The section 32 stores the internal state and external state of electronic pet agents 63 and the environment data about the agents 63.

The server 1-1 to 1-n act as information sources in the case where the agent 63 exits in the user computer 3-1 and acquires information from the external computers.

The agent 63 moves to or has access to the server computer 1-n that stores the information it wants to acquire through the communications network 2. The agent 63 autonomously performs a key-word-search to select the server computer 1-n that has the information it wants to obtain. That is, the agent 63 performs a search by using a key word and access to sites which are hit and then acquires the information. The specific key word corresponds to "particular concept," and the sites accessed by the use of the key word correspond to "a space defined by the particular concept."

Not only a key word, but also a class of information can be the "particular concept" if the information is classified and filed.

The agent management program 61-1 controls the will and behavior of the agent 63 that acts as an electronic pet, in accordance with the information about the agent, the internal and external states of the agent 63 and the environment data about the agent 63. The information about the agent has been supplied from the knowledge database 26. The data representing the internal and external states is stored in the electronic-pet state storage section 32. The environment data is stored in the storage section 32, too. The results of the control are stored into the electronic-pet state storage section 32.

The agent management program 61-1 generates an agent 63 that can autonomously act. The agent 63 thus generated can act as a characterized electronic pet on a display screen such as a television screen. The agent 63 controlled in an agent management system 3-1a is not limited to one only. Rather, two or more agents may be controlled in the system 3-1a.

The agent management program 61-1 comprises a data-acquiring section 61-1a, a data-analyzing section 61-1b, a data-providing section 61-1c, and an agent-data exchanging section 80. The data-acquiring section 61-1a acquires the user information, the information selected from media such as TV programs and radio programs, and the similar information. The user information, the information selected, and the like are stored into an acquired data storage section 60-2, which will be described later.

The agent management program 61-1 is stored in the HDD 14. A monitoring program is always stored into the RAM 13. The CPU 11 performs processes in accordance with the monitoring program stored in the RAM 13.

The history of the user's execution of the program can be always obtained in the form of log data, even if the agent 63 that is an electronic pet is not displayed on the display screen such as a television screen.

The data-analyzing section 61-1b analyzes the user's taste based on the user information and generates a key word from the result of analysis. More specifically, the section 61-1b acquires the agent management program 61-1 and the user information, both stored in the HDD 14, and store them into the RAM 13. Then, the section 61-1b cooperates with the CPU 11 to perform operations on the user information, analyzing the user's taste and generating a key word. The key word thus generated is stored into a key word storage section 30.

The key word is written from the key word storage section 30 into the RAM 12. The CPU 11 performs an operation on the key word. The agent 63 then autonomously searches the server computers 1-1 to 1-n for a timely topic that agrees with the user's taste and then presents the topic to the user. The topic may be a weather forecast, a traffic jam report, current news, entertainment news, new musical works, or the like.

Not only can the agent 63 autonomously provide information, but also the user can designate a time bracket and the address of an information site to obtain the information about anything that he or she has selected. For example, the user may wish to know how the baseball game is going on while he or she is using computer. In this case, the user designates the time bracket of the baseball game and the address of the site that gives quick reports on the game.

The user then gives a message of, for example, "Let me know the result of the game," to the agent 63. The agent 63 acquires the information representing the result of the game, from the designated site in the server computers 1-1 to 1-n and transmits the information to the user. In this case, the electronic pet/agent 63 appears in a corner of the screen of the display 17 of the user computer 3-1. The electronic pet displays a message of "Team A won at 1 to 0" or "Team A won in the bottom of the ninth inning."

Alternatively, the user may request that a specific news site should give him or her top news. More precisely, the user may request that a quick news site should give him or her quick news reports, excluding weather reports designated by inputting a key word. In this case, the electronic pet/agent 63 displays a message of, for example, "Today an earthquake hit the Kanto area." This dialog is accomplished by the use of the agent management program 61-1.

The data-providing section 61-1c selects information for the user. The section 61-1c determines the will and behavior of the electronic pet/agent 63, from the instinct and knowledge of the agent 63. The section 61-1c then give the user the information showing the will and behavior of the electronic pet.

That is, the data-providing section 61-1c uses the retrieval key word to obtain, from the server computers 1-1 to 1-n, the information that the user will probably need. The section 61-1c gives the user the information thus obtained.

The data-providing section 61-1c determines what expression or what costume the electronic pet/agent 63 will have or wear when it gives the information. The section 61-1c determines the expression or costume from the data stored in the common rule storage section 27 that is incorporated in the knowledge database 26. The common rule storage section 27 will be described later.

The data representing the manner in which the electronic pet/agent 63 gives information, which the data-providing section 61-1c has determined, is supplied to the electronic-pet state storage section 32, updating the data stored in the section 32. The electronic-pet state storage section 32 will be described later.

The data representing the manner in which the electronic pet/agent 63 gives information, which the data-providing section 61-1c has determined, is input to a picture-drawing system 36 and an audio-data generating system 37, which will be described later. The system 36 generates an image of the electronic pet/agent 63 from the data supplied from the data-providing section 61-1c. The audio-data generating system 37 generates a speech the electronic pet/agent 63 will utter, from the data supplied from the data-providing section 61-1c. (If the user has no display, only the speech may be output.)

The knowledge database 26 is stored in the storage device such as the HDD 14. The knowledge database 26 contains the behavior data about the electronic pet (the agent 63), the attribute information about the user, various key-word data items, data items to be given to the user, and the like. The behavior data includes data items that represent how the electronic pet acts, what language it speaks and how it behaves.

The knowledge database 26 comprises a server data storage section 60-1, an acquired data storage section 60-2, an agent storage section 60-3, the common rule storage section 27, an individual rule storage section 28, an attribute data storage section 29, and the key word storage section 30. The server data storage section 60-1 stores the information concerning the server computer 1-1. More specifically, the section 60-1 stores the address of the server computer 1-1 that the agent 63 has accessed. It also stores the information resources including the places 65 provided in the community 67.

The agent 63 of this embodiment can write and read information into and from the acquired data storage section 60-2, agent storage section 60-3, common rule storage section 27, individual rule storage section 28, attribute data storage section 29 and key word storage section 30, which will be described below. The other agents stationed in the user computer 3-1 and the mobile agents can write and read information into and from these components, too. This means that two or more agents share the acquired data storage section 60-2, agent storage section 60-3, common rule storage section 27, individual rule storage section 28, attribute data storage section 29 and key word storage section 30. The following description of the section 60-2, section 60-3, section 27, section 28, section 29 and section 30 holds true of not only the agent of this embodiment, but also any electronic pet/agent that can be stored in the user computer 3-1.

The knowledge database 26 is read and written into the RAM 13 when the agent management program 61-1 is activated. The CPU 11 performs operations on the knowledge database 26. The display therefore displays the electronic pet/agent 63 as an animation image that moves and changes its expression. Thus, the pet/agent 63 can autonomously talk with the user, asking questions and chatting. (If the user has no display, the pet/agent talks through a loudspeaker or the like.)

The electronic pet (agent 63) may keep speaking to the user (not listening to the user) or may ask the user questions to receive answers. If the pet only speaks to the user, the message it may utter when the agent management system 3-1a is activated is "Hello!," "It is raining today. Take an umbrella with you," or the like.

The message may contain a piece of news, an event in the past and an event scheduled for the future. These contents of the message may be stored in the acquired data storage section 60-2. Alternatively, they may be generated from the information obtained from the server computers 1-1 to 1-n or from any other agents.

The electronic pet (agent 63) may ask questions, such as "Do you like sports?," "Do you like baseball games?," and the like. The user answers these questions. The user's answers to the questions made by the electronic pet/agent 63 are stored, as user information, into the user profile provided in the attribute data storage section 29, as will be described later.

The common rule storage section 27 stores the common information that represents the instinct of the electronic pet/agent 63. The section 27 stores data for setting, for example, the expression, motion and voice of the electronic pet and the reaction the pet may make in response to the user or electric devices.

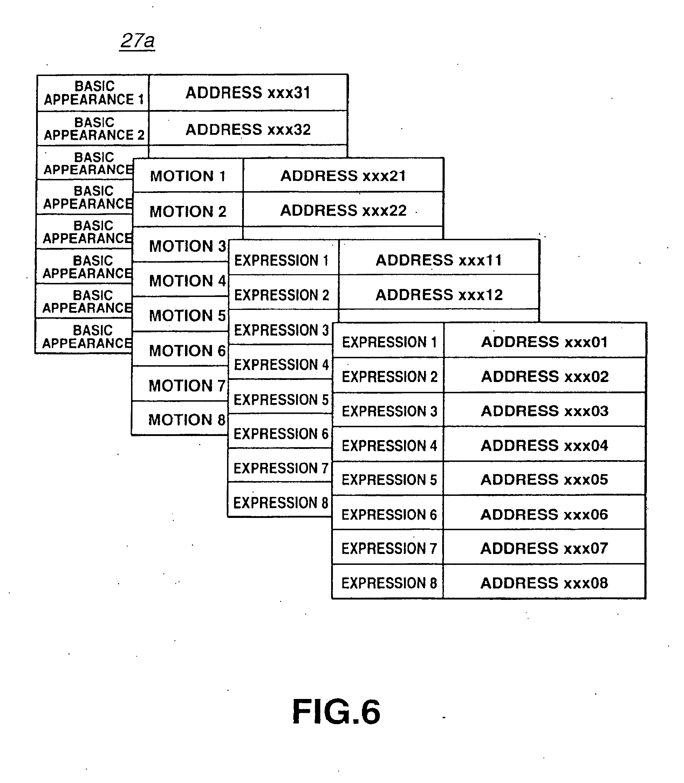

The common rule storage section 27 incorporates a memory map 27a of the data items that determines the features of the electronic pet/agent 63 displayed on the screen. As FIG. 6 shows, the memory map 27a is configured to record the basic appearance, motion, message, expression and the like, at specific addresses of the user area. The data items can be read from the addresses so that the electronic pet/agent 63 may have the basic appearance, show the expression, wear a particular costume, makes a specific motion, utter a voice and make a reaction.

The electronic pet/agent 63 can take, for example, six different basic appearances. Basic appearance 1 is a dog, basic appearance 2 is a human being, basic appearance 3 is an imaginary animal, basic appearance 4 is a fish, basic appearance 5 is a creature from outer space, and basic appearance 6 is a dinosaur. The data items representing these basic appearances are stored in the common memory map 27a.

The electronic pet/agent 63 can have, for example, seven different expressions. Expression 1 is smile, expression 2 is anger, expression 3 is sadness, expression 4 is relaxation, expression 5 is impression, expression 6 is expressionless, and expression 7 is disappointment. The data items indicative of these expressions are stored in the memory map 27a.

The electronic pet/agent 63 can be dressed in, for example, six different costumes. Costume 1 is a business suit, costume 2 include a camera, costume 3 includes a headphone, costume 4 is a uniform, costume 5 includes a napkin, and costume 6 includes a personal computer. The data items showing these costumes are stored in the memory map 27a.

The electronic pet/agent 63 can make various motions. Motion 1 is standing, motion 2 is dancing, motion 3 is desk work, motion 4 is music-editing, motion 5 is talking with a travel agent over the telephone, motion 6 is data retrieval through the Internet, and so forth. The data items representing these motions are stored in the memory map 27a.

Of the data items stored in the memory map 27a and representing the basic appearances, one data item is selected to display the agent 63 as an electronic pet on the display screen.

A particular basic appearance is selected for the agent 63. The basic appearance of the agent 63 can be changed to another when the user or the breeder operates the input device.

For example, the basic appearance of the agent 63 may be designated as "fish" in the community 67. If so, the user can change the basic appearance to "rabbit" when he or she buys the agent 63.

Of the data items stored in the memory map 27a, those indicating the motion, message and expression can be selected every time the agent 63 is displayed on the screen, so that the agent 63 may be displayed with features that agree to the conditions in which the agent 63 is displayed.

More precisely, the expression of the agent 63 is predetermined in accordance with the message the agent 63 gives. For example, the agent 63 looks cheerful and moves positively when it gives a message "It is fine today," "Congratulations!" "You have won it," or "It is bright." Conversely, the agent 63 looks sad and moves passively when it gives a message "It is raining," "An accident has occurred," "I am embarrassed," or "I am scared." (If the message is an audio one given through a loudspeaker, it may be accompanied with music or an imitation sound. For example, a cheerful music accompanies the message "It is fine today," a melancholy music accompanies the message "I am scared," and the sound of rain accompanies the message "It is raining.")

If the user may accesses the community 67 at night, the agent 63 of the community 67 may appear in pajamas. If the user accesses the community 67 at three in the afternoon, the agent 63 may appear as if taking a break and may look relaxed.

The individual rule storage section 28 stores rules of operating the agent management system 3-1a, which are specific to the user. Among these rules are, for example, the frequency at which the electronic pet (agent 63) appears on the display screen, the frequency at which the pet asks the user questions, the number of characters that the agent management system 3-1a can display, the kinds of voices each character can utter, the types of characters (for example, a creature from outer space, an animal, a plant, a robot, or the like).

The individual rule storage section 28 stores data items that enable the user to use the agent management system 3-1a more easily. These data items include a data item that specifies whether each message of the electronic pet (agent 63) should be displayed in a bracket, a data item that designates the speed at which the message should be displayed, a data item that designates the language in which the message should be given, and a data item that determines whether the audio output should be stereophonic or monaural.

The attribute data storage section 29 stores a user profile that is the attribute information of the user. The user profile contains the birthday of the user, the family members of the user, the birthdays of the family members, the hobbies of them, and the life styles of them.

Other data stored in the attribute data storage section 29, in addition to the user profile, includes the answers to the questions the agent may ask. The other data also includes the data input in an input form, such as questionnaire, when the section 29 is connected to any given server computer 1-n by the communications network 2. A data-acquiring section 61-1a collects these data items input via the user computer 3-1. The data items collected are accumulated in the attribute data storage section 29. The amount of data accumulated in the attribute data storage section 29 may exceed a preset value. If so, the latest information is stored in the attribute data storage section 29, while deleting the old information that overflows the attribute data storage section 29.

Note that the user profile is scarcely updated. Therefore, the user profile may be protected. The user profile would otherwise be deleted.

The agent 63 utilizes these data items held in the attribute data storage section 29, as information that represents the user's taste. Namely, the agent 63 analyzes the information showing the user's taste, formulating key words and a dictionary. Based on the key words and the dictionary, the agent 63 autonomously collects information. The agent 63 performs the autonomous acquisition of information at all times.

The user profile may be registered in both individual rule storage section 28 and the attribute data storage section 29, at the initial setting, or either at the time of installing the program or at the time of the first activation of the program. Other data terminals may be employed to inform a specific agent of the user's taste, the agent working on behalf of the user. In this case, the user profile can be registered in, for example, the attribute data storage section 29 when the agent is called to a new data terminal.

The key word storage section 30 stores two key words. The first key word is the fundamental data. The second key word has been generated by the data-analyzing section 61-1b that is incorporated in the agent management program 61-1. The key words may be classified into some categories. If so, they can be retrieved with higher efficiency than otherwise.

The acquired data storage section 60-2 stores information sources for the user. The information sources provide, for example, the questions to the user, the answers that may be given to the user in the course of conversation, small talks with the user, knowledge on daily life, and knowledge on various subjects. The information sources give data items. Of these data items, one may cause the electronic pet to appear autonomously on the computer screen, asking the user questions or gives advice "You should better do this to enjoy a cup of good tea" or displays a message "Today is the birthday of Mr. President" or a similar message, generated from the date information acquired from an environment data storage 35.

The acquired data storage section 60-2 stores other information. The other information has been collected by the data-acquiring section 61-1a of the agent management program 61-1 for the user, from the server computers 1-1 to 1-n.

That is, the acquired data storage section 60-2 collects the information supplied to the user computer 3-1 as the agent 63 autonomously accesses the server computers 1-1 to 1-n and acquires information via the communications network 2. The acquired data storage section 60-2 stores the information the other agents have obtained, if any mobile agent or a stationed agent, other than the agent 63, exists in the user computer 3-1. Furthermore, the section 60-2 stores the information obtained by any other means.

Thus, the acquired data storage section 60-2 holds not only the information the agent 63 has acquired, but also the information any other agent has acquired and agents 63 employed in the user computer 3-1 have obtained. If a plurality of agents exist, the information each agent has acquired can be exchanged with another agent by way of the acquired data storage section 60-2.

The electronic-pet state storage section 32 stores the various states that the electronic pet assumes as time passes or as events take place, said pet being the agent that is to be displayed on the display screen. Of these states, the internal parameters of the electronic pet, i.e., emotion, hanger, interest and the like (these parameters are not known to any other electronic pet), are stored in an internal state storage section 33.

In the electronic-pet state storage section 32, an external state storage section 34 stores the external parameters of the electronic pet (which are distinct from those of any other electronic pet), such as the position, orientation, color and the like. Further, an environment data storage section 35 stores the parameters of the physical environment of the electronic pet/agent 63 (for example, objects other than the pet, weather, temperature, gravity, date and the like).

The information stored in the environment data storage section 35 is acquired from the contents of the server computers 1-1 to 1-n. The information represents weather data (rainy, fair, hot, cold, etc.), news (earthquake, great events, etc.), entertainment news (engagement of famous entertainers, release of musical works, etc.), and reports on the operating state of other electric apparatuses.

The electronic pet (agent 63) may appear on the computer screen and speaks, "I am hungry," based on the information stored in the internal state storage section 33. Alternatively, the electronic pet may give a message of "I am not in a good humor because it is raining today," "The power switch to the apparatus OO is still on" or the like.

Based on the information stored in the external state storage section 34, the electronic pet (agent 63) can appear in various costumes and attitudes. If the environment data storage section 35 provides the information that represents the message of "It is raining today," the electronic pet (agent 63) will appear in a raincoat and a bad mood on the display screen and will speak. This is because the internal state storage section 33 stores the information representing the message of ""I am not in a good humor because it is raining today."

The pet is thus displayed on the screen by using the data items stored in the common rule storage section 27, in accordance with the information that is stored in the internal state storage section 33.

The agent storage section 60-3 stores various mobile agents and various stationary agents. The agent 63 may be transmitted from the server computer 1-1 to the user computer 3-1. If so, the programs for processing the agent 63 will be stored into the user computer 3-1. The agent 63 is transmitted if the user has bought the agent 63 and the user computer 3-1 gives a command to the server computer 1-1, demanding that the server computer 1-1 should transmit the agent 63.

Hence, the user computer 3-1 will execute the programs to process the agent 63 if the agent 63 exists in the agent storage section 60-3.

Namely, if the agent 63 exists in the agent storage section 60-3, the data acquisition program, the agent program and the like are executed in accordance with the instructions supplied from the CPU 11 of the user computer 3-1. The user computer 3-1 may execute these programs upon receipt instructions for translation, music compression and the like.

The user computer 3-1 may instruct that programs be autonomously executed in the community 67. If so, various processes will be autonomously executed in the community 67. In this case, the agent 63 collects, by itself, data items that agree to the user's taste, on the basis of the information stored in the user computer 3-1 and representing the user's taste.

The user uses the input device 38 to input information in order to execute the agent management program 61-1. Usually the user uses the input device 38 to input data into his computer. The input device 38 may be a keyboard, a mouse, a touch panel, a joystick, a data glove, or the like. Alternatively, it may be an external storage device such as an FD drive.

The picture-drawing system 36 stores data items that represent the outer appearance, motion and language of the electronic pet, i.e., a displayed figure of the agent 63. The picture-drawing system 36 receives a motion-indicating signal that has been generated from the information stored in the knowledge database 26, by executing the agent management program 61-1. The system 36 generates electronic-pet image data that indicates the will and motion of the electronic pet (i.e., agent 63). The system 36 holds this electronic-pet image data for some time.

The data items representing the outer appearance, motion and language of the pet and stored in the picture-drawing system 36 may include data items representing the overall image, expression, costume, hand-leg motion and mouth motion of the electronic pet, and a data item showing message boxes.

The audio-data generating system 37 stores audio data, which is one expression item of the agent 63. The audio-data generating system 37 receives a pet-motion signal that the agent management program 61-1 has generated from the information stored in the knowledge database 26. Based on the pet-motion signal the system 37 generates audio data that represents the will and motion of the electronic pet. The audio data thus generated is temporarily stored in the audio-data generating system 37. The audio data includes various items, such as the voice pitch, talk speed and intonation of the electronic pet.

The image and audio data items about the electronic pet are supplied to the output device 39. An application program may be installed in the HDD so that the automatic telephone dialing may be accomplished. If this is the case, the electronic pet (i.e., agent 63) can make a call to the user's mobile telephone and talk to the user through telephone.

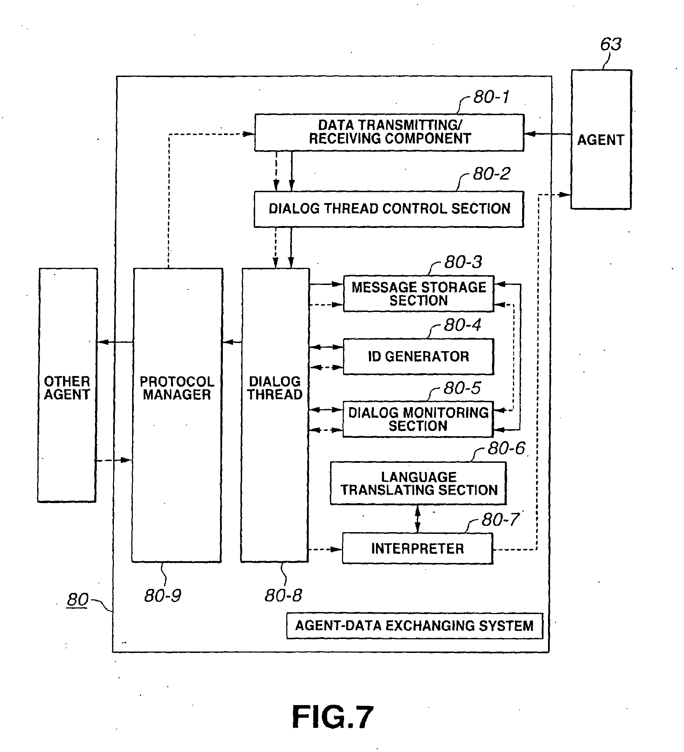

The agent-data exchanging section 80 enables the agent 63 to exchange information any other mobile or stationary agent that exists in the community 67 or the server computers 1-1 to 1-n, or with any other mobile or stationary agent that exist in the user computer 3-1. The agent-data exchanging section 80 will be described below, with reference to the block diagram of FIG. 7.

The agent-data exchanging section 80 shown in FIG. 7 is a system installed in the region where there exist agents, such as the server computers 1-1 to 1-n and the user computers 3-1 to 3-n. The section 80 serves to transfer information among the agents. The section 80 enables the agents to exchange information. In the user computer 3-1, the agent-data exchanging section 80 depicted in FIG. 7 is provided in the agent management program 61-1.

The agent 63 may be a mobile agent sent to the server computer or the user computer. Alternatively, it may be a stationary agent provided in the server computer or the user computer. The agent 63 transmits a message packet to another agent or receives a message package therefrom, through the agent-data exchanging section 80. Thus, the agent 63 can talk with the other agent.

The message packet has various contents. Among the contents are a data item showing the type of the message, the address of the message sender, the address of the message receiver, a dialog (question/answer) ID for linking a question with an answer, a data-acquisition program for the agent, and the information to send or receive. Further, the contents include a software item that generates instructions from the message packet after the packet has moved to any other place.

In the agent-data exchanging section 80, the data transmitting/receiving component 80-1 can receive a message from the agent 63, an existing system or the network. The section 80 can also transmit a message to the agent 63, the existing system or the network.

In the section 80, the dialog thread control section 80-2 is a component that can control a dialog thread 80-8 that represents the dialog between the agent and the section 80, generate an appropriate thread from the dialog and control any dialog thread that has been already generated. The section 80-2 may be so configured as to enable the agent to talk with other agents in parallel asynchronous mode.

In the section 80, the message storage section 80-3 is a component that stores dialogs. The dialog monitoring section 80-5 is a component that performs policy check, thereby to determine whether a dialog can be achieved, from the message log stored in the message storage section 80-3 and the contents of the dialog undergoing at present.

In the section 80, a language translating section 80-6 is a component that translates, if necessary, the dialog into a dialog of another language. The interpreter 80-7 is a component that interprets any dialog to keep the dialog going.

How the components of the agent-data exchanging section 80 operate during any dialog will be described, with reference to the arrows indicated in solid lines in FIG. 7. First, the agent 63 sends a message packet to the agent-data exchanging section 80. Upon receiving the message packet, the agent-data exchanging section 80 determines whether the message packet is one that initiates a talk or one that receives a talk. If the message packet is one for initiating a talk, the dialog thread control section 80-2 is activated.

When activated, the dialog thread control section 80-2 determines whether a dialog thread has been generated, from the response ID that is contained in the message packet. If a dialog thread has been generated, the process goes to the dialog thread 80-8. If no dialog has been generated, a new dialog thread 80-8 is generated. In this case, the dialog thread control section 80-2 gives an instruction to an ID generator 80-4 via the dialog thread 80-8. Upon receiving the instruction the ID generator 80-4 generates a new dialog ID and assigns the same to the new dialog thread 80-8. Then, the process goes to the new dialog thread 80-8.

The message storage section 80-3 stores the message packet transmitted to the dialog thread 80-8.

The dialog monitoring section 80-5 receives the message packet. The section 80-5 then performs policy check to determine whether a dialog can be accomplished, from the dialog stored in the message log stored in the message storage section 80-3 and the contents of the dialog undergoing at present. If the section 80-5 finds that a dialog cannot be achieved, it determines that an error has occurred. If so, the dialog thread 80-8 processes the message packet and transmits a new message packet indicating the error.

If the section 80-5 finds that a dialog can be achieved, it transmits the message packet from the dialog thread 80-8 to the other agent (node) that has been designated by means of a protocol manager 80-9. The protocol manager 80-9 converts the message packet to a packet that accords with a protocol appropriate for the message receiver.

The message packet can be transmitted in various manners. It can be transmitted within the same community 67, in any one of the user computers 3-1 to 3-n, or to another computer via the network.

How the components of the agent-data exchanging section 80 operate at another character (node) that has received the message packet from the protocol manager 80-9 will be described, with reference to the arrows indicated in dotted lines in FIG. 7.

The data transmitting/receiving component 80-1, which has received the message packet from the protocol manager 80-9, determines whether the message packet is that initiates a talk or one that receives a talk. If the message packet is one for receiving a talk, the component 80-1 requests that the dialog thread control section 80-2 should process the message packet.

The dialog thread control section 80-2 refers to the response ID that is contained in the message packet. If a dialog thread has already been generated, the process goes to the dialog thread 80-8. If a new dialog has been generated, the section 80-2 generates a new dialog thread 80-8. The section 80-2 gives an instruction to the ID generator 80-4 via the dialog thread 80-8. The process therefore goes to the dialog thread 80-8.

The message storage section 80-3 stores the message packet transmitted to the dialog thread 80-8.

The dialog monitoring section 80-5 receives the message packet. The section 80-5 then performs policy check, determining whether a dialog can be carried out, from the dialog log stored in the message storage section 80-3 and the contents of the current dialog. If no dialog is possible, the section 80-5 determines that an error has been made. If this case, the section 80-5 processes the message packet in order to transmit a message packet showing the error.

If it is determined that a dialog can be carried out, the dialog thread 80-8 transfers the process to the interpreter 80-7. The interpreter 80-7 may be registered as one that corresponds to the language type, program type and the like of the message packet received. If so, the interpreter 80-7 is used to interpret the contents of the message packet. If the interpreter 80-7 is not registered as one that corresponds to the language type, program type and the like of the message packet received, it is determined whether the interpreter library includes an interpreter that the system can have access to.

If the interpreter library does not include such an interpreter, it is determined that no further process is possible. If in the interpreter library includes such an interpreter, the interpreter is registered as interpreter 80-7. The interpreter 80-7 thus registered interprets the contents of the message packet. The language translating section 80-6 translates the message packet, if necessary, to a message packet in another language.

The result of interpretation, obtained by the interpreter 80-7, is transmitted to the agent 63. The agent 63 performs a process that accords with the instruction described in the contents of the packet. The message received may, for example, demand the transmission of information. Then, the agent 63 transmits the information demanded. The dialog thread 80-8 waits for the next message packet.

Thus, the agent 63 can exchange information with not only the other mobile or stationary agents that exist in the community 67 and the server computers 1-1 to 1-n, but also the other mobile or stationary agents that exist in the user computer 3-1.

The units with which the agent 63 may exchange information are not limited to other agents. Rather, the agent 63 can exchange information with, for example, the pet-state storage section (not shown) provided in the user computer 3-1 and the data storage section incorporated in the knowledge database 26. Therefore, information can be exchanged such that a mobile agent stores information into the user computer 3-1 and any other agent can use the information stored in the user computer 3-1.

The system of exchanging of information between the agents is not limited to the one described above. The agents can exchange information by means of method calling (sub-routine call), message passing, or the like.

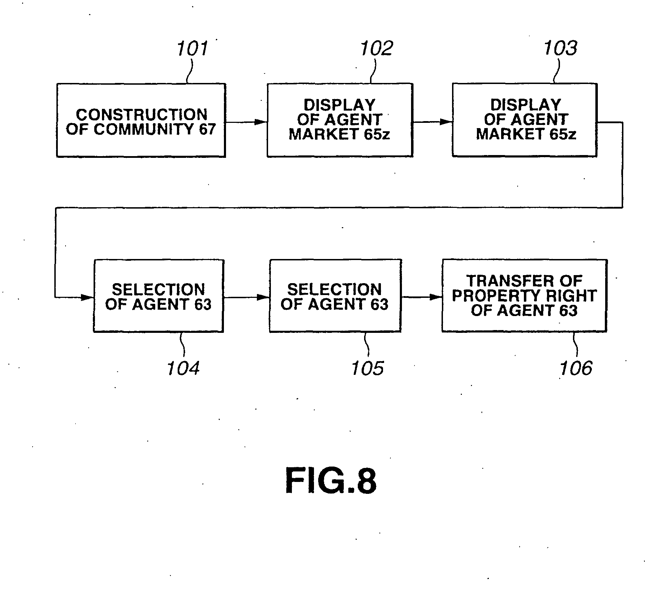

The program relating to the agent system according to this embodiment will be explained. The program performs various processes, which are shown in FIGS. 8 to 12, in the server computer 1-1, thereby operating the agent system.

These programs are stored in a data recording medium such as an HDD, a CD-ROM, or the like. They are read from the data recording medium into a control device such as a CPU. The control device executes the programs, performing various processes.

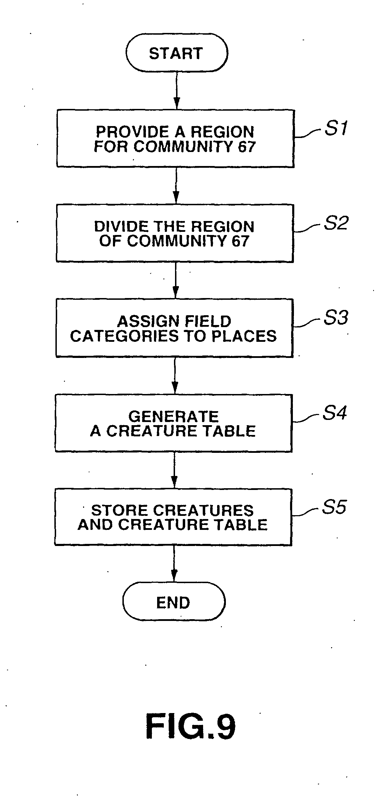

How the programs are executed in the agent system according to this embodiment will be outlined, with reference to FIG. 8. First, the community 67, which is a prescribed region when the agent 63 can exist, is constructed and recorded in the HDD of the server computer 1-1 (Process 101). This process shall be called "community-constructing program process (A)," which is illustrated in FIG. 9.

The community 67 may be constructed in only one server computer 1-1. Alternatively, it may be provided in a plurality of server computers 1-1 to 1-n and used as virtual spaces.

In the community 67 thus provided, an agent market 65z is constructed in the community 67 (Process 102). In this process, a region for the agent market *65z* is provided in the community 67 at first. Next, the agent 63 that can be bought and sold is extracted from the creature table shown in FIG. 5. Then, an agent storage section for storing agents for sales is formed in the data storage section 69 of the community 67. The agent extracted and the data about this agent, which has been read from the creature table, are stored into the agent storage section thus formed.

Next, the agent market 65z is displayed on the display screen (Process 103). In this process, image data representing the streets of the community 67 is generated. The image data, also showing the agent market building 91, is stored into the data storage section 69 of the community 67. Further, image data representing the interior of the shops operating in the agent market 65z is generated. This data is stored into the data storage section 69 of the community 67, too.

A pointer for the image data representing the interior of the shops operating in the agent market 65z is registered in the image data that represents the streets of the community 67.

Thereafter, a community management program 69b is generated, which can display the image data that representing the streets of the community 67 and the image data representing the interior of the shops operating in the agent market 65z. The community management program 69b is stored into the data storage section 69 that is provided in the community 67.

Process 103 is performed, making it possible to display, on the display screen, the streets of the community 67, the agent 63 and the creature 64, both living on the streets, and the interior of the shops operating in the agent market 65z.

When the agent market 65z is displayed on the screen, the agent 63 is displayed so that the user may select the agent 63 in the agent market 65z (Process 104).

More precisely, the contents, function and the like of the program for the agent 63 to be sold are displayed in the form of a text-data list. Alternatively, the user may select the agent 63 by clicking the ion electronic pet, which is displayed in a shop operating in the agent market 65z and which corresponds to the agent 63.

In this process, format data is prepared to display the contents of the agent 63 put for sale. The format data is stored into the data storage section 69 that is provided in the community 67.

Next, an agent extraction program is prepared to extract agents 63 for sale. The agent extraction program is stored into the data storage section 69 of the community 67. The extraction program is generated when the salability column 117, the owner ID and the like, all described in the creature table shown in FIG. 5, are retrieved. The agent extraction program is executed to extract the agents 63 that are put for sale.

It is desired that the extraction program have various functions. These functions includes: the function of extracting all agents 63 for sale; the function of extracting any agent 63 in accordance with the program for processing the agent 63; and the function of extracting agents 63 that have similar appearances. Process 104 is performed, enabling the user to find and select an agent 63 that has a desirable program or a desirable appearance.

Thereafter, one of the agents 63 is designated in accordance with the user's instructions (Process 105). In this process, an agent 63 is identified when the user selects the agent 63.

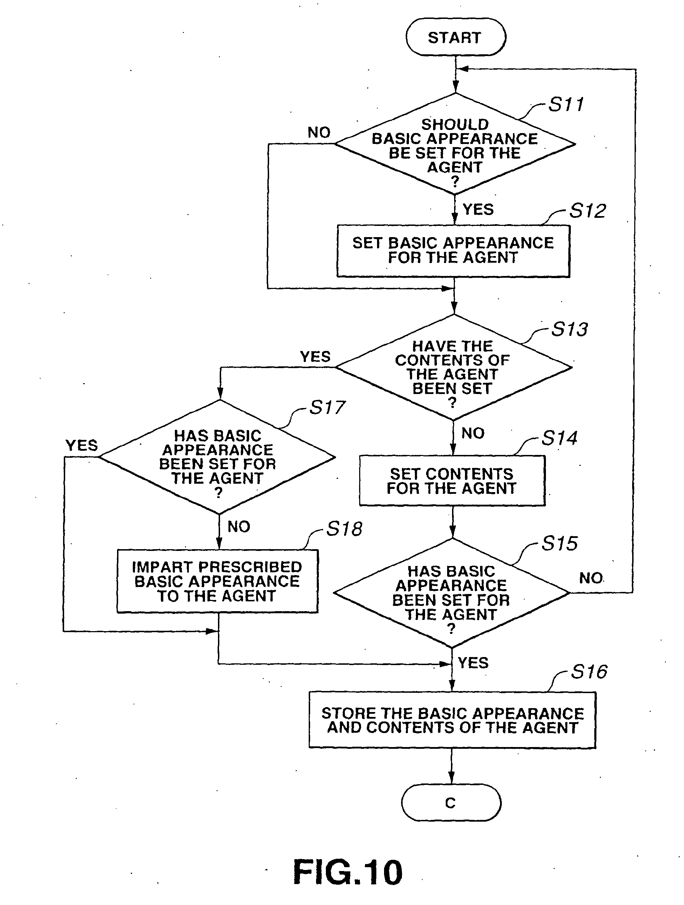

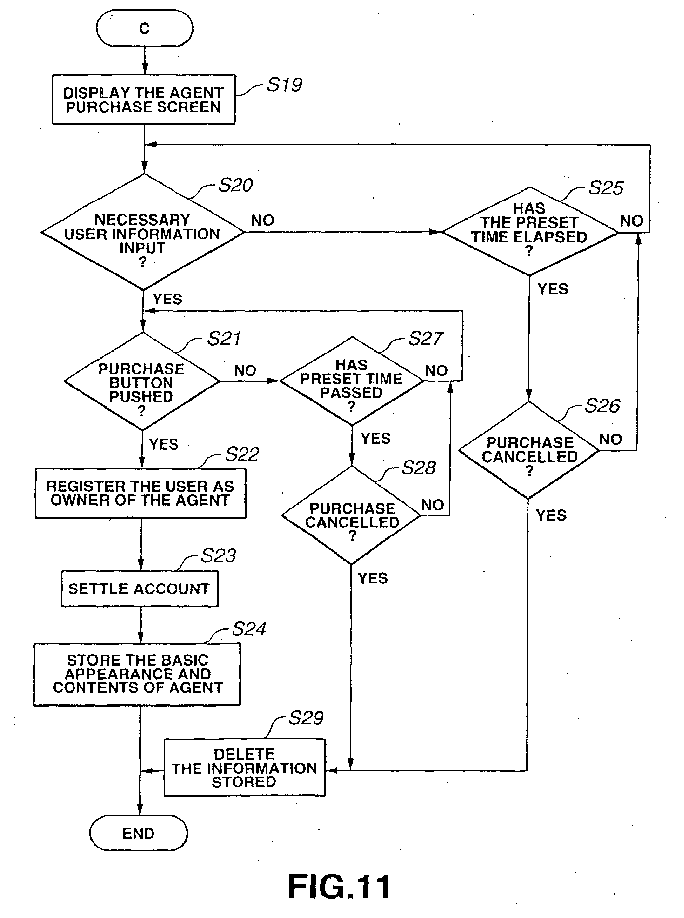

The property right to the agent 63 designated is transferred (Process 106). Process 106 is carried out as the program (B) of registering the owners of the electronic pet/agent. The program (B) will be described later, with reference to FIGS. 10 and 11. Thereafter, programs are no longer executed in the agent system according to the present embodiment.

The program process (A) of constructing the community, which is related to Process 101, will be explained with reference to FIG. 9. In this process, a region for the community 67 is provided in the storage area of the server computer 1-1 (Step S1). The storage area is, for example, an HDD or the like.

The region for the community 67 is divided into places (addresses) 65a to 65w (Step 2). Categories of fields, such as image-processing, translation and the like, are assigned to these places (Step S3). Each place is used as a group of data items of one field.

The creature table shown in FIG. 5 is generated (Step S4). The creature table contains data about creatures and data showing the relation between the creatures and the places.

The data storage section 69 is then constructed in the community 67. The creatures and the creature table are stored in the data storage section 69 (Step S5). Thereafter, the process is then terminated.

The information in the creature table is rewritten whenever necessary, whereby the creature table is updated. To store a new creature table into the community 67, for example, the data of the new creature table to the existing creature table. The creature table is thereby updated. The creature 64 may grow and developed into the agent 63. The creature 64 may be bought or sold, changing hands. In either case, the data will be updated.

The program process (B) of registering the owner of the electronic pet/agent, which is related to process 106, will be explained with reference to FIGS. 10 and 11. The community 67 contains a program for transferring the property right to the agent. The program for registering the owner of the agent is executed to perform the following processes.

At first, it is determined whether a basic appearance should be set for the agent that has been designated in Process 105 described above (Step S11). If the user has input an instruction of setting a basic appearance for the agent 63 (that is, if Yes in Step S11), a basic appearance is set for the agent 63 (Step S12).

More specifically, an appearance-setting screen is displayed on the display, and the sets a basic appearance for the agent. The user may set either the basic appearance prescribed for the agent or a desirable basic appearance different from the prescribed one.

The agent 63 has the prescribed basic appearance at the time the user selects the agent 63 in the agent market 65z. In Step S12, the basic appearance of the agent 63 may be altered or not altered. Assume that the prescribed basic appearance is of "fish." Then, the basic appearance may remain "fish" or may be changed to "rabbit." After a basic appearance has been set for the agent, it is determined whether the contents of the agent have been set or not (Step S13).

If the user has not input an instruction of setting a basic appearance for the agent 63 (that is, if No in Step S11), it is determined whether the contents of the agent have been set (Step S13).

In Step S13 it may be determined that the contents of the agent have not been set. In this case, the process goes to Step S14 and thence to Step S15. If No in Step S15, the process returns to Step S11. In Step S13 it may be determined that the contents of the agent have been set (that is, if Yes in Step S13). In this case, it is determined whether a basic appearance has been set for the agent (Step S17). If it is determined in Step S12 that a basic appearance has been set for the agent (that is, if Yes in Step S17), the basic appearance and contents of the agent are stored (Step S16).

In Step S17 it may be determined that no basic appearance has been set for the agent (that is, No in Step S17). In this case, it is considered that the user does not care for the basic appearance of the agent 63. Thus, the prescribed basic appearance is imparted to the agent 63 (Step S18). Then, the basic appearance and contents of the agent are stored (Step S16).

It may be determined that the contents of the agent have not been set (that is, if No in Step S13). If so, the contents of the agent are set (Step S14). The term "contents of the agent" means the execution speed, precision, language (Japanese, English, French, Chinese, etc.) and the like of the process program the agent 63 has and the retrieval key word of a retrieval program that the agent 63 may have. If the agent 63 has a plurality of process programs, the content of the agent include an item designates a specific program that should be executed prior to any other process programs.

The contents of the agent are set in the following manner. First, a screen for setting the contents of the agent 63 designated is displayed. Then, the user who wishes to buy the agent 63 sets desired contents for the agent 63 on the screen displayed.

Next, it is determined whether a basic appearance has been set for the agent (Step S15). If a basic appearance has been set for the agent 63 (that is, if Yes in Step S15), it is considered that the basic appearance and contents of the agent 63 have been set completely. In this case, the basic appearance and contents of the agent are stored (Step S16).

If a basic appearance has not been set for the agent 63 yet (that is, if No in Step S15), the process returns to Step S11. Thus, it is determined whether a basic appearance should be set for the agent (Step S11).

No basic appearance may be set for the agent 63 in Step S12. If this is the case, the process returns from Step S15 to Step S11. Hence, it is determined again whether a basic appearance should be set for the agent. If No in Step S11, the process goes to Step S13 to Step S17 and thence to Step S18. This is because the contents of the agent have been already set. The prescribed appearance is therefore imparted to the agent 63. The process goes from Step S16 to Step 19 that is shown in FIG. 11.

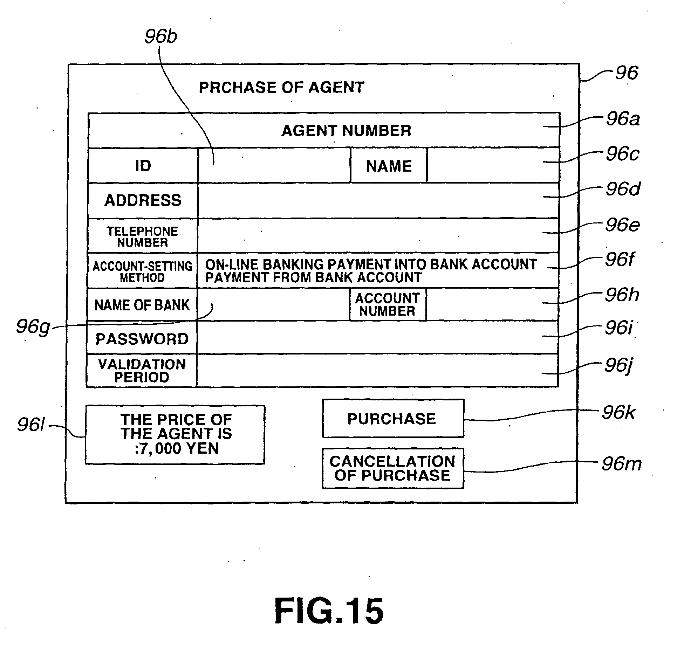

After the basic appearance and contents of the agent have been stored, an agent purchase screen shown in FIG. 15 is displayed (Step S19). It is determined whether the minimum user information required to transfer the property right to the agent has been input (Step S20). The minimum user information includes the user ID 96b, the account-settling method 96f, the bank name 96g, the account number 96h, and the password 96i. The agent purchase screen 96 has columns in which the name 96c, address 96d, telephone number and the like of the user can be described. These columns are not absolutely necessary. In other words, the user's name, address, telephone number and the like can be processed even if they have been not input.

If the user information required has been input (that is, if Yes in Step S20), the process advances to Step S21. If the user information required has not been input (that is, if No in Step S20), it is determined whether a preset time, for example 15 minutes, has elapsed or not (Step S25).

If the preset time has passed (that is, if Yes in Step S25), it is determined whether the user has pushed a purchase-canceling button 96m, thus canceling the purchase of the agent (Step S26). If it is determined that the user has canceled the purchase of the agent (that is, if Yes in Step S26), the information stored in Step S16 is deleted (Step S29). Then, the process is terminated.

It may not be determined that the user has cancelled the purchase of the agent (that is, if No in Step S26). In this case, the process returns to Step S20. In Step S20 it is determined again whether the necessary user information has been input. Thus, Steps S20 and S25 are repeated until the user information is input or the purchase is cancelled.

If the preset time has not passed (that is, if No in Step S25), the process goes back to Step S20. In Step S20 it is determined whether the necessary user information has been input. That is, Steps S20 and S25 are repeated until the preset time has elapsed.

In Step S20 it may determined that the user information has been input, it is determined whether the user has pushed a purchase button 96k (Step S21). If the user has pushed the purchase button 96k (that is, Yes in Step S21), the process advances to Step S22. If the user has not pushed the purchase button 96k (that is, No in Step S21), it is determined whether a preset time, for example 15 minutes, has bee elapsed or not (Step S27).

If the preset time has passed (that is, if Yes in Step S27), it is determined whether the purchase has been cancelled by, for example, detecting the depressing of the purchase-cancelling button 96m (Step S28). If it is determined that the purchase has been cancelled (that is, if Yes in Step S28), the information stored in Step S16 is deleted (Step S29). Then, the process is terminated.

If it is not determined that the purchase has been cancelled (that is, if No in Step S28), the process returns to Step S21. In this case, it is determined whether the user has pushed a purchase button 96k (Step S21). Namely, Steps S21 and S28 are repeated until the user pushes the purchase button or cancels the purchase after the preset time has elapsed.

If the user pushes the purchase button (that is, if Yes in Step S21), the user is registered as the owner of the agent (Step S22). Then, the account is settled by the method designated on the agent purchase screen (Step S23). In the present embodiment, simultaneous settlement is effected by means of on-line baking. The money for the agent is paid into the seller's account at the same time the account is settled in Step S23.

Thereafter, the agent is transferred to the user (Step S24). The user can now use the agent. The process is then terminated.

On-line banking is carried out to achieve simultaneous settlement in this embodiment. Nonetheless, the account can be settled by the use of a credit card, by paying the money into the seller's bank account, or by transferring the money from the user's account to the seller's account. It takes several days until the seller receives the money if the user pays it into or transferred it to the seller's account. In this case, the seller may transfer the agent after he or she receives the money.

In the embodiment described above, the user selects an agent in the agent market. Instead, the user may buy or sell an "agent for sale" through a "friend agent" that is an agent of the user. For example, the user may input an "allowance-giving" command, thereby giving an allowance to the friend agent. The friend agent finds the "agent for sale" the user wishes to buy. If the agent is sold at a price smaller than the allowance given to the friend agent, the user can purchase the agent. This method of purchasing an agent is similar to purchasing things by the use of a prepaid card, preventing children from buying expensive things.

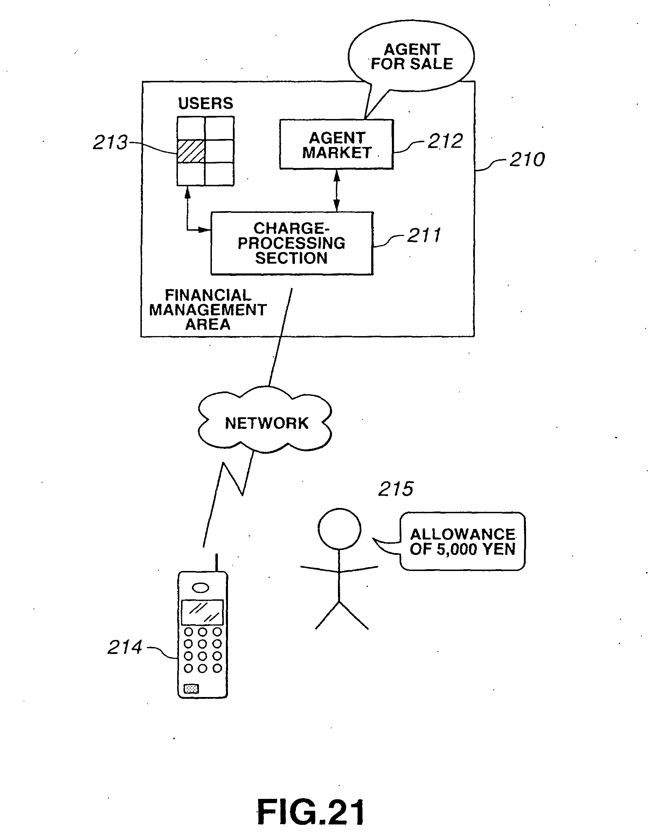

This process will be described in detail, with reference to FIG. 21. At first, the user calls the friend agent 215 at his or her terminal device 214. The user then inputs an "allowance-giving" command, thereby handing an allowance of 5,000 yen to the friend agent 215. When this command process is performed, the charge-processing section 211 provided in a server computer 210 effects on-line banking, thus performing simultaneous settlement. Thereafter, the section 211 stores the data representing the allowance of 5,000 yen into the financial management area 213 allocated to the user. In this condition, the friend agent can buy anything sold at a price equal to or less than 5,000 yen. The friend agent 215 searches the network or the agent market 212 for an agent that meets the user's taste. The friend agent can then buy the agent and transfer the same to the user's terminal device 214.

A method of purchasing an agent sell at an auction will be explained. To facilitate the explanation, it is assumed that only one agent is put for the auction and that two or more users cannot use it at the same time. In this case, the user who wants to use this agent accesses the agent market. The user then inputs the time when he or she wishes to start using the agent and the time when he or she will return the agent. If no other users want to use this agent at the same time, the user can use the agent only if he or she pays the fixed charge. If any other person wishes to use the agent at the same time, the user register his price for the agent at the auction. Of all persons who register their prices, the one who offers the highest price obtains the right to use the agent. A network address, such as an IP address of IP ver. 6, may be assigned to the agent for sale. If this is the case, the owner of the agent for sale can send a message directly to possible buyers. If the agent represents a popular singer, the owner has the privilege to enjoy a chat with the singer or exchange messages with the singer. Such privilege, if any, increases the added value of the agent. The agent may be then appraised at the highest price at the auction. This may increase the profit of the owner of the agent.

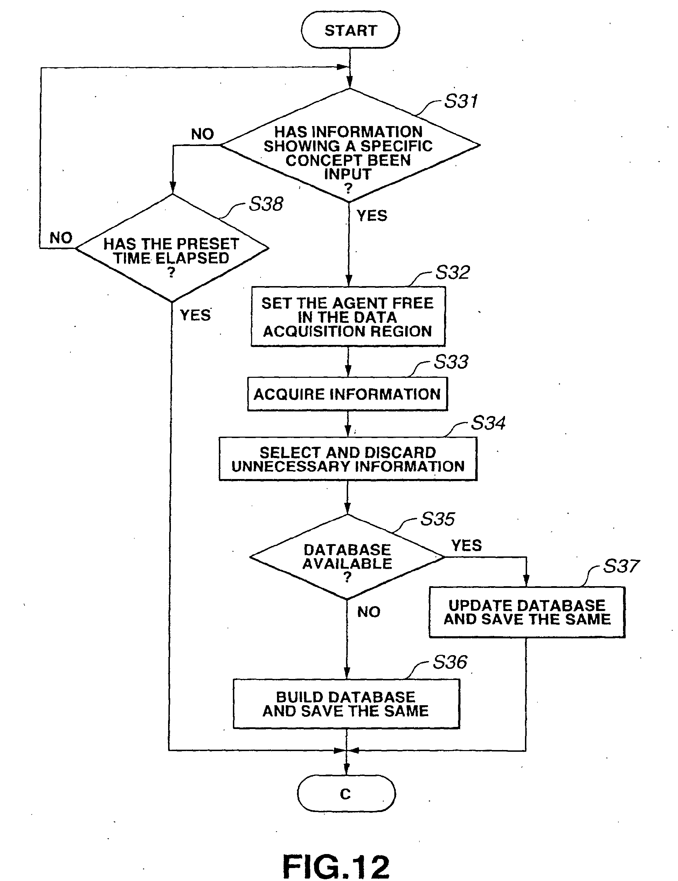

The agent-breeding process (D) in which the breeder brings up an agent will be described, with reference to FIG. 12. Any agent stored in the agent market 65z provided in the community 67 has an agent-breeding program, which is executed to breed the agent. When the agent-breeding program is executed, the following process is carried out.

At first, it is determined whether the information representing a specific concept has been input to define a data acquisition region where the user can set the agent free (Step S31). The information showing the specific concept is supplied from the input device of the breeder's computer when the breeder inputs a key word.

If the information showing the specific concept has been input (that is, if Yes in Step S31), the agent is let run loose in the data acquisition region defined by the specific concept (Step S32). The term "data acquisition region defined by the specific concept" means a set of sites that have been retrieved in accordance with the key word the breeder has input. In most cases this region covers a plurality of server computers 1-1 to 1-n. That is, the agent is set free in the region that corresponds to a set of sites.

The information showing the specific concept may not be input (that is, if No in Step S31). If so, it is determined whether a preset time, for example 15 minutes, has elapsed (Step S38). If the preset time has not passed (that is, if No in Step S38), the process returns to Step S31. In other words, Step S31 is repeated until the preset time elapses. If the preset time has passed (that is, if Yes in Step S38), the process is automatically terminated.

After set free in the data acquisition region defined by the specific concept (Step S32), the agent autonomously acquires information in the data acquisition region (Step S33). Namely, the agent walks around in the server computers 1-1 to 1-n, autonomously collecting information in the region defined by the specific concept.

At this time, the agent generates a key word from not only the specific concept, such as a key word, supplied from the user in Step S31, but also the user information recorded in the user profile that is stored in the attribute data storage section 29. Using this key word, as well as the key word given at Step S31, the agent collects information. The agent can therefore acquire information more desirable to the user than the information it may have obtained by using only the key word given at Step S31.

Then, the agent selects unnecessary items from the information it has acquired. The unnecessary information items are discarded (Step S34). This makes it possible to build a compact database that contains necessary data items at a high ratio to unnecessary data items. The agent selects unnecessary information items in accordance with not only the specific concept, such as the key word supplied from the user at Step S31, but also the key word generated from the user information stored in the attribute data storage section 29.

Thereafter, it is determined whether any database is available, which contains the information concerning the specific concept given in Step S31 (Step S35). If a database containing the information about the specific concept is available (that is, if Yes in Step S35), the information items acquired at Steps S33 and S34 are added to the database. The database is thereby updated and saved (Step S37). The process is then terminated.

If a database containing the information about the specific concept is not available (that is, if No in Step S35), the information items acquired at Steps S33 and S34 are accumulated, thus building a database and saving this database (Step S36). The process is then terminated.

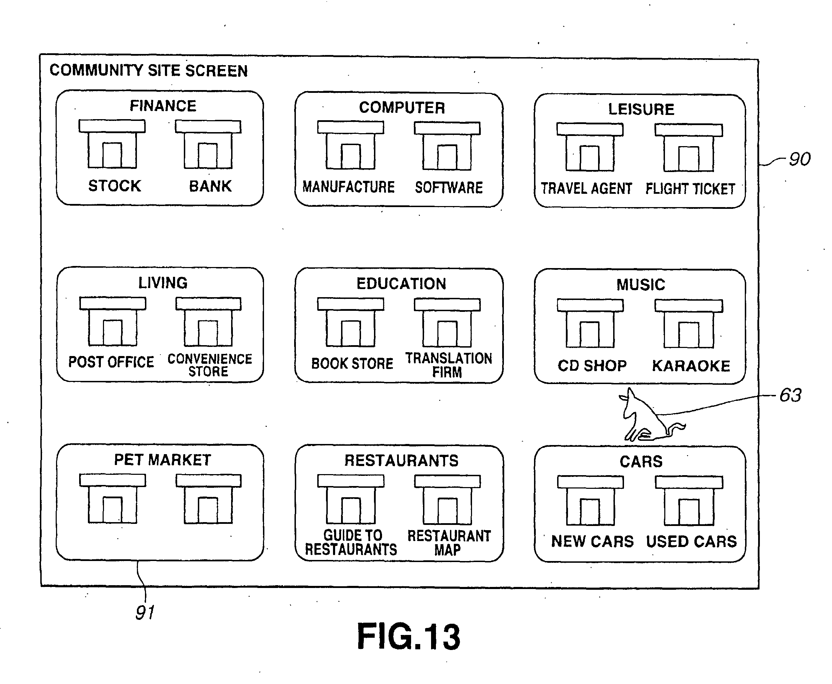

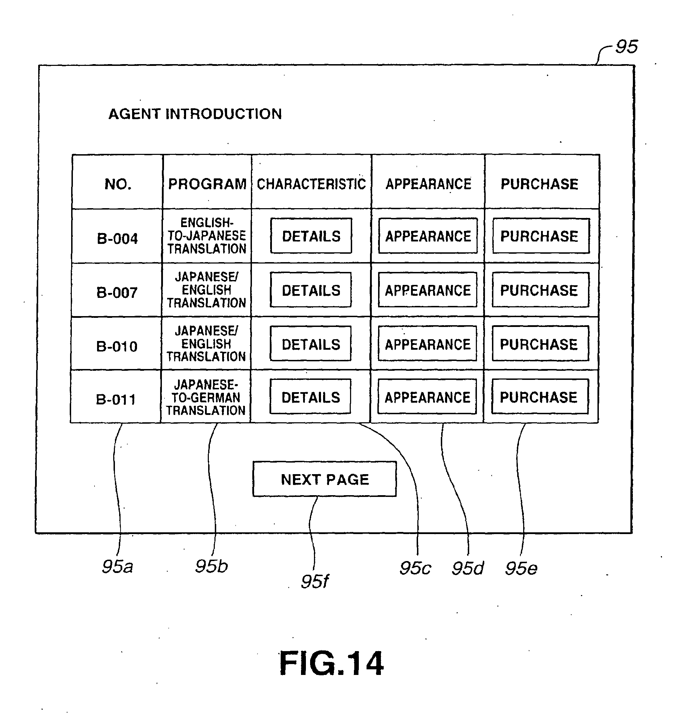

How the agent system according to this embodiment operates will be described with reference to FIGS. 13 and 14. FIG. 13 illustrates the screen of a community site. FIG. 14 shows an agent introduction screen, which the user may use to purchase an agent 63 from the company that provides the electronic pet/agent system, thereby to transfer the property right concerning the agent 63, to the user.

The community 67 is divided into places 65, in which creatures 64 exist. The user accesses the server computer 1-1 from the user computer 3-1 through the communications network 2. The user can therefore see the creatures 64 displayed on the community side screen 90 of the server computer 1-1. On the community side screen 90, the community 67 is displayed as a town comprising some districts. The creatures 64 are displayed in the form of various characters. The user can see the creatures 64 displayed on the community side screen 90, some agents 63 talking with one another on the screen 90, and various events displayed on the screen 90.

The server computer 1-1 has an agent introduction page 95. The agent introduction page 95 shows the ID number 95a, program content 95b, characteristic 95c, appearance 95d and ownership of each agent 63 that the provider of the server sells in the community 67. On the agent introduction page 95 shown in FIG. 14, click buttons are displayed for the characteristic 95c and the appearance 95d. When the user clicks either button, the page is switched to a page that displays the characteristic or appearance in greater detail.

The user can access the agent introduction page 95 to select any agent 63 that he or she wishes to purchase. After selecting a desired agent 63, the user may click the purchase button 95e shown on the agent introduction page 95. In this case, an agent purchase screen 96 shown in FIG. 15 is displayed, showing the price 961 of the agent. After confirming the price 961, the user inputs the ID number 96b of the user computer 3-1, his or her personal data items 96c to 96e such as name, address, telephone number and the like, the account-settling method 96f, the password 96i, the validation period 96j and the like. Then, the user clicks the purchase button 96k, thereby purchasing the agent. Thus, the owner of the agent is registered by the use of the agent purchase page 96.

After the owner has been registered, the screen is switched back to the agent introduction page 95. At this time, the buttons selected change in color. When any button selected is clicked again, the item selected is displayed, whereby the user can confirm which agent he or she has selected. After confirming the agent selected, the user clicks a "next page" button 95f displayed on the agent introduction page 95.

The user may buy an electronic pet/agent from any corporation, any organization or any individual by the use of the agent purchase page 96. The account may be settled by any method available, such as on-line banking, payment into bank account, payment from bank account, or the use of credit card, or the like.

The price of each electronic pet/agent may be fixed. Alternatively, the price may be determined in accordance with the ability of the agent, the number of clicks made for the agent, or the evaluation made by people. Still alternatively, the price may be determined at an auction held on a homepage.

After the owner of the agent has been registered, simultaneous settlement is effected by means of on-line banking. After paying the price to the seller of the agent 63, the buyer (i.e., the new owner) can use the agent 63.

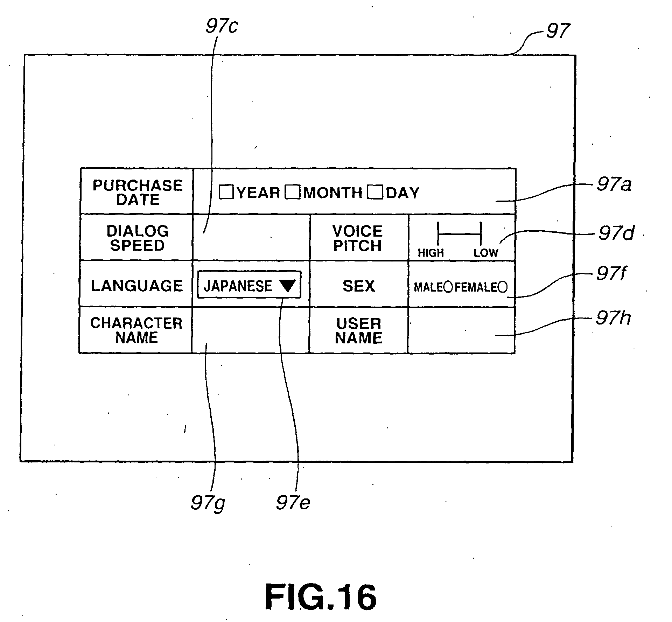

When the user clicks the "next page" button 95f on the agent introduction page 95, an agent setting page 97 shown in FIG. 16 is opened so that the initial setting can be performed.

In the initial setting, the user may input various data items, such as purchase data 97a (year-month-day), dialog speed 97c, voice pitch 97d, pull-down language menu 97e, sex selection box 97f, character-name input box 97g, user-name input box 97h, and the like. These data items are input to adjust the features of the agent 63 minutely.

The user can access the agent setting page whenever desired, after the user buys the agent and before the user sells the agent, provided that he or she identities himself or herself by the use of the password. The values initially set can be changed whenever desired.

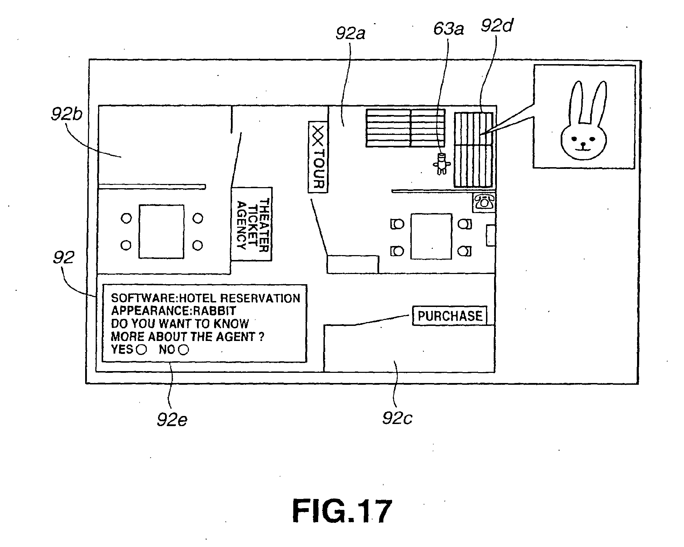

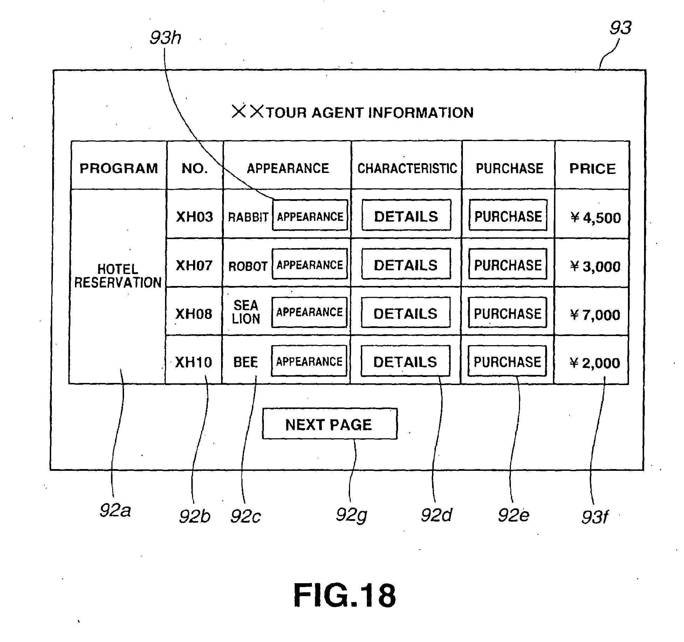

FIG. 17 illustrates an agent market screen. FIG. 18 depicts a screen for displaying the information about the sale of agents. With reference to FIGS. 17 and 18 it will be described how the user buys an agent 63 from another breeder in the market 65z provided in the community 67, to get the ownership transferred to him or her.

First, the user accesses the community 67 from the user computer 3-1. Hence, the user has access to the pet market 91, which is displayed on the community site screen shown in FIG. 13. When the user accesses the pet market 91, the screen is switched to the agent market screen 92 illustrated in FIG. 17.

The offices 92a to 92c of breeders and buyers are displayed on the agent market screen 92 shown in FIG. 17. The user moves a cursor or an agent 63a, i.e., the user's eye, to the cage 92d installed in the breeder's office 92a, into which the user wants to look. Then, a screen 92e is displayed in the lower-left corner of the screen. Shown in the screen 92e is the message of: "Do you want to know more about the agents?" Also shown in the screen 92e are an "Yes" button and a "No" button. If the user clicks the "Yes" button displayed in the screen 92e, an agent information screen 93 shown in FIG. 18 is displayed, giving information about the agents offered by the breeder.

The agent information screen 93 is a page that has been formulated at the breeder's responsibility. As shown in FIG. 18, the agent information screen 93 shows the program 93a for processing the agents 63, the ID numbers 93b of the agents, appearance 93c, characteristic buttons 93d, purchase buttons 93e, and prices buttons 93f. Appearance buttons 93h are displayed in association with the appearances 93c. When the user clicks any one of the appearance buttons 93h, selecting the agent associated with the button 93h clicked, the appearance of the agent selected is displayed. When the user clicks any one of the characteristic buttons 93d, the characteristic of the agent selected is displayed in detail. When the user clicks any one of the purchase buttons 93e, an agent purchase screen is displayed.

Such an agent purchase screen 96 as is shown in FIG. 15 is formulated at the breeder's responsibility. The user may take the procedure to buy an agent as has been described with reference to FIG. 15. If so, the agent selected is sold from the breeder to the user, whereby the property right to the agent is transferred to the user. When the purchase is thus completed on the agent purchase screen 96, the screen is switched back to the agent information screen 93 depicted in FIG. 18. At this time, the screen 93 displays all agents, but the agent 63 that has been sold to the user.

Thus, the user can possess the agent 63 by taking the procedure of buying the agent 63 from the provider of the electronic pet/agent system or from the breeder of the agent 63.

At this time the user may click the purchase button 96k for the agent registered in the agent sales-data storage section 69c. If so, the new owner of the agent is registered. Alternatively, the owner of the agent may be registered, by taking a procedure of registering the ownership, instead of the above-mentioned procedure of buying the agent.

Thereafter, the agent 63 carries out processes in accordance with the instructions that the user inputs by operating the input device 38. The agent 63 operates in accordance with the instructions given from the user computer 3-1, while staying in the community 67.

While the agent 63 is performing processes, the server computer 1-n in which the agent 63 exists may remain connected to the user computer 3-1. Alternatively, the server computer 1-n may be connected to the user computer 3-1 only when it receives instructions from the server computer 3-1 or only when it reports the results of the processes to the user computer 3-1.

The agent 63 may be stored into the agent storage section 60-3 when the user purchases the agent and the property right to the agent 63 is thereby transferred to the user. In this case, the agent storage section 60-3 executes the program specific to the agent 63, and the agent 63 performs "its own business." The business of the agent depends on the program, which is executed based on the user's instruction input at the input device 38 or the instructions supplied from the CPU 11.

The agent 63 has a data-acquisition program and an analysis program, in addition to the program specific to it. The agent 63 acquires information from the acquired data storage section 60-2 and other data storage section (not shown) of the knowledge database 26, from the other stationary or mobile agent (not shown) of the user computer 3-1. The agent 63 analyzes the items of information acquired, thereby to determine the user's taste.

The agent 63 can therefore perform processes on the basis of the user's taste and in accordance with the instructions supplied from the user or the CPU 11. The program processes can be effected with high efficiency, also for the user.

Assume that the agent 63 has a translation program. Then, the agent 63 can translate any document the user has designated. The agent 63 obtains items of information from the acquired data storage section 60-2 and other data storage section (not shown) of the knowledge database 26. The agent 63 processes the information items, thereby generating key words and a dictionary of technical terms that are frequently used in the user's special field. Therefore, the user can translate the document with high efficiency.

The information representing the user's taste may be accumulated in the knowledge database (now shown) that is incorporated in the server computer 1-1. Based on this information (the user's taste) the agent 63 may carry out processes on behalf of the user.

Based on the user's taste the agent 63 can acquire information more efficiently than otherwise. The agent 63 may analyze the user information, determining that the user is interested in cars. In this case, the agent 63 contacts the other agents having much information about the cars existing in the community 67 and acquires the information from the other agents. This acquisition of information is accomplished by using a keyword that indicates the user's taste and which the agent 73 has generated by using a key-word generating program. The agent 63 effects the program process in the community 67, assisted by the community management program 69b provided in the server computer 1-1.

Buyers work to by the agents in the market 65z opened in the community 67. They may buy the agent 63 the user possesses, to have the property right to the agent 63 transferred to them. The user can sell the agent 63 to any one of the buyers if the agent 63 is no longer necessary for him or her.

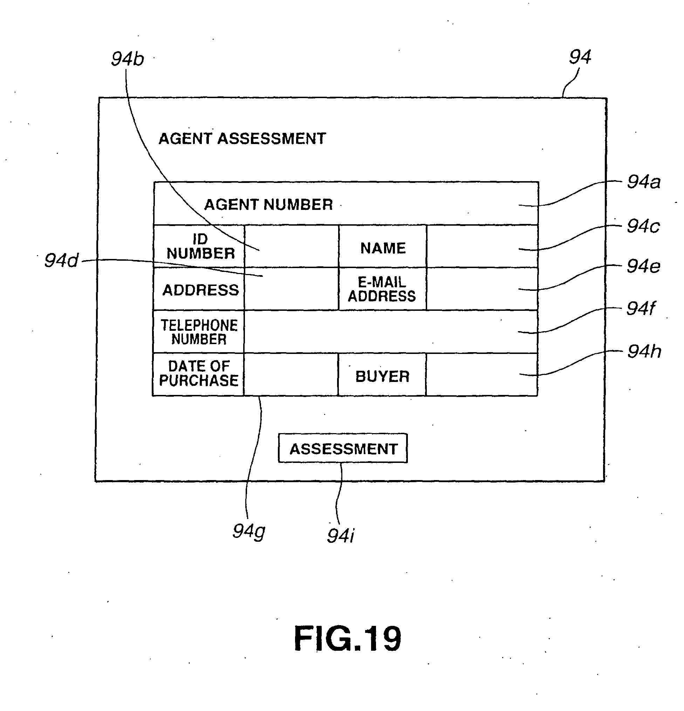

Each buyer has an agent-assessment homepage 94 that is shown in FIG. 19. If the user wants to sell the agent 63, he or she enters the buyer's office 92c displayed on the agent market screen 92 illustrated in FIG. 17. On the agent market screen 92, the user talks with the buyer, asking the buyer to estimate the price of the agent 63. Then, the screen is switched to the agent-assessment homepage 94 shown in FIG. 19.

On the agent-assessment homepage 94 the user inputs the agent ID number 94a, the user ID number 94b, the name 94c, address 94d, E-mail address 94e, telephone number 94f of the user, the date 94g of purchasing the agent, the name 94h of the buyer (or the breeder). Next, the user clicks an "assessment" button 94i. The agent 63, which is identified with the agent ID number 94a the user has input, is automatically sent to the buyer. The buyer examines the contents and amount of the program that is specific to the agent 63, thus estimating the price at which the buyer can buy the agent 63 from the user.

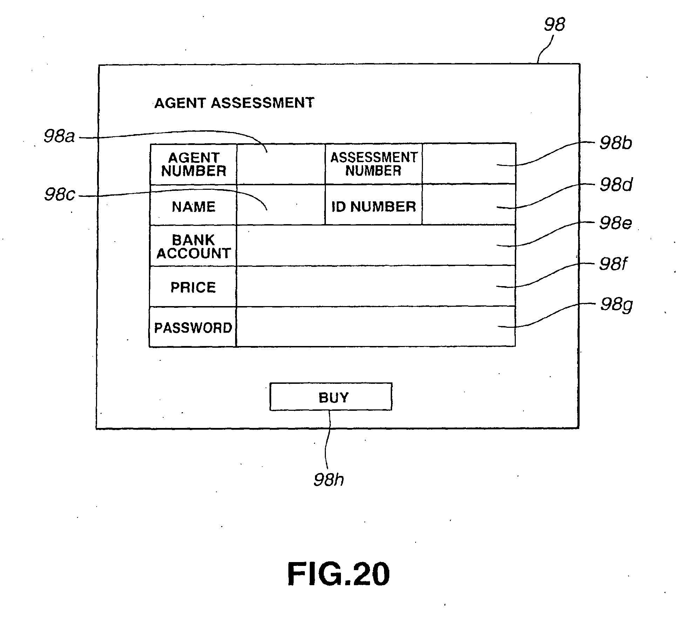

When the buyer finishes estimating the price of the agent 63, the buyer sends the agent 63 back to the user and informs the user of the result of the assessment, for example by E-mail. Based on the result of the assessment, the user decides whether he or she should sell the agent 63. If the user wants to sell the agent 63, he or she enters the buyer's office 92e displayed on the agent market screen 92 illustrated in FIG. 17. The user then asks buyer to buy the agent 63. The screen is switched to an agent buying homepage 98 shown in FIG. 20.

On the agent buying homepage 98 of FIG. 20, the user inputs the agent ID number 98a, the assessment number 98b described in the results of assessment, the name 98c, ID number 98d, bank account 98e of the user, the price 98f presented in the results of assessment, and an authentication password 98g. Thereafter, the user clicks the sales button 98h, transmitting the agent 63 to the buyer. The buyer buys the agent 63. The price at which the buyer buys the agent 63 will be paid into the user's bank account a few days later.

When the user clicks the sales button 98h, the owner of the agent 63, i.e., the buyer, is registered in the agent sales-data storage section 69c. Alternatively, the user may take a procedure to register the new owner, not by clicking the "sell" button 98h.

Thereafter, the buyer displays the agent 63 on the agent information screen 93 (FIG. 18) or on the agent introduction page 95 (FIG. 14) of the provider of the electronic pet/agent system.

It is possible for the user to generate such an agent sales homepage as is shown in FIG. 18, not selling the agent 63 to the buyer, and then act as a breeder to sell the agent 63.

As indicated above, the agent 63 can be bought and sold among the user, the provider of the electronic pet/agent system and the software firm or breeder who raise the agent 63. Agents 63 having different characteristics can therefore be bred and put on sale. The user can therefore has many choices in the course of selecting an agent 63.

Since the market 65z is available in which agents 63 can be bought and sold, the user can enjoy finding some agents 63, each exhibiting desirable individuality. Moreover, the software firm or breeder has a chance of selling the agent 63 they have reared, at a high price. In short, they can get new business chances.

The agent 63 is displayed as an electronic pet on the display screen. The user can therefore utilize the agent system for amusement.

### Industrial Applicability

As has been described, the community has an agent market in which the property right to each agent can be transferred from one person to another. Any software firm, any breeder and the like can sell whichever agent they have raised, at a high price. They can get a new business chance.

Therefore, the breeding of agents is activated at breeder firms and software firms. The firms breed many agents exhibiting various characteristics. This increases choices the user can have. Hence, the user can enjoy selecting some agents, each exhibiting desirable individuality.

## Claims

1. An agent system comprising:
at least one client computer which has a display device connected to a communications network; and
at least one server computer connected to the client computer by the communications network and having a community which can store an agent,
wherein the community has an agent market in which properties right to the agent can be transferred.

2. The agent system according to claim 1, wherein the agent has a process program for performing at least one process selected from the group consisting of a information collecting process and an agent process.

3. The agent system according to claim 1, wherein the agent has an electronic pet/agent displaying program for causing the display device to display the agent in the form of an electronic pet.

4. The agent system according to claim 1, wherein the agent has an independent network address.

5. The agent system according to claim 1, wherein the property right is transferred by registering an owner of the agent by owner-registering means provided in the community.

6. The agent system according to claim 1, wherein the agent is set free in a data acquisition region defined by specific concept, and a database can be constructed by accumulating information that is autonomously acquired in the data acquisition region.

7. The agent system according to claim 1, wherein the agent is specialized in a prescribed field.

8. An agent buying/selling method comprising:
building a community that can store an agent in a computer that is connected to an information device by a communications network;
opening an agent market in the community;
displaying the agent as an agent that can be selected in the market opened in the community; and
designating the agent displayed in the market, thereby to transfer property right to the agent.

9. The agent buying/selling method according to claim 8, wherein the agent that can be bought and sold is a process program for performing at least one process selected from the group consisting of a information collecting process and an agent process.

10. The agent buying/selling method according to claim 8, wherein the agent has an electronic pet/agent displaying program for displaying the agent in the form of an electronic pet.

11. The agent buying/selling method according to claim 8, wherein the agent has an independent network address.

12. The agent buying/selling method according to claim 8, wherein the property right is transferred by registering an owner of the agent by owner-registering means provided in the community.

13. The agent buying/selling method according to claim 8, wherein the agent is set free in a data acquisition region defined by specific concept, and a database can be constructed by accumulating information that is autonomously acquired in the data acquisition region.

14. The agent buying/selling method according to claim 8, wherein the agent is specialized in a prescribed field.

15. A data-providing apparatus connected to an information device by a communications network comprising a community in which the agent is stored, having an agent market in which properties right to the agent can be transferred.

16. The data-providing apparatus according to claim 15, wherein the agent has a process program for performing at least one process selected from the group consisting of a information collecting process and an agent process.

17. The data-providing apparatus according to claim 15, wherein the agent has an electronic pet/agent displaying program for causing a display device provided in the information device to display the agent in the form of an electronic pet.

18. The data-providing apparatus according to claim 15, wherein the property right is transferred by registering an owner of the agent by owner-registering means provided in the community.

19. The data-providing apparatus according to claim 15, wherein the agent is set free in a data acquisition region defined by specific concept, and a database can be constructed by accumulating information that is autonomously acquired in the data acquisition region.

20. The data-providing apparatus according to claim 15, wherein the agent is specialized in a prescribed field.

21. A data-recording medium storing a program comprising the steps of:
building a community which can store an agent that is connected to an information device;
opening an agent market in the community;
displaying the agent as an agent that can be selected in the market opened in the community;
designating the agent displayed in the market; and
transferring property right to the agent designated.

22. The data-recording medium according to claim 21, wherein a process program is stored to perform at least one process selected from the group consisting of a information collecting process and an agent process.

23. The data-recording medium according to claim 21, wherein an electronic pet/agent displaying program is stored to display the agent in the form of an electronic pet.

24. The data-recording medium according to claim 21, wherein an owner-registering program is stored to register an owner of the agent by owner-registering means provided in the community.

25. The data-recording medium according to claim 21, wherein an agent-breeding program is stored, said program comprising a step of setting free the agent in a data acquisition region defined by specific concept and a step of constructing a database by accumulating information that is autonomously acquired in the data acquisition region.

26. The data-recording medium according to claim 21, wherein the agent is specialized in a prescribed field.
